(19) Europäisches Patentamt / European Patent Office / Office européen des brevets

(11) **EP 2 679 439 B1**

(12) **EUROPEAN PATENT SPECIFICATION**

(45) Date of publication and mention of the grant of the patent:
**15.06.2016 Bulletin 2016/24**

(51) Int Cl.:
**B60N 2/28** *(2006.01)*  **B60N 2/42** *(2006.01)*

(21) Application number: **12195163.6**

(22) Date of filing: **30.11.2012**

(54) **Energy-dissipation system**

Energiezerstreuungssystem

Système de dissipation d'énergie

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.06.2012 EP 12305739**

(43) Date of publication of application:
**01.01.2014 Bulletin 2014/01**

(73) Proprietor: **Dorel France**
**49309 Cholet Cedex (FR)**

(72) Inventors:
 • **Oltman, Stephen**
  **Hope IN 47246 (US)**
 • **Menon, Rajiv**
  **Columbus IN 47203 (US)**
 • **Lin, Meihui**
  **Nashville IN 47448 (US)**
 • **Renaudin, François**
  **49300 Cholet (FR)**
 • **Garnier, Nicolas**
  **49230 Saint Germain sur Moine (FR)**

(74) Representative: **Vidon Brevets & Stratégie**
**16B, rue de Jouanet**
**B.P. 90333**
**Technopole Atalante**
**35703 Rennes Cedex 7 (FR)**

(56) References cited:
**WO-A1-2011/054063  US-A1- 2007 246 925**
**US-A1- 2009 091 166**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## FIELD OF THE INVENTION

The present disclosure relates to an energy-absorbing apparatus, and in particular, to devices for dissipating energy associated with external impact forces. More particularly, the present disclosure relates to an energy-dissipation system included in a juvenile product such as a child-restraint system.

## PRIOR ART

When exposed to an external impact force, a juvenile vehicle seat at rest on a seat in a car or truck will accelerate as it moves to a new location in the passenger compartment of a car or truck. A child seated in such a moving juvenile vehicle seat will also accelerate as the juvenile vehicle seat moves in the passenger compartment.

WO-A-2011/054063 which corresponds to the preamble of claims 1 and 15 concerns a child safety seat comprising a seat body with a base portion, a back portion, a headrest, and an impact energy absorbing element positioned at or about the level of the headrest, wherein the height of at least the impact energy absorbing element above the base is adjustable, and the impact energy absorbing element i comprises a pad filled with a material having an energy absorbing honeycomb structure adapted to absorb and/or redirect blows incident to or about at least the headrest of the seat.

The parallel orientation of the crush cell of such honeycomb structure regarding the pad's surface where a part of the body of child rests provides a "cushion effect", which does not permit to stabilise the crushing and thus the child's part of the body, which is resting on the pad.

A g-load is a measurement of an object's acceleration measured in g's. The g is a non-SI unit equal to the nominal acceleration due to gravity on earth at sea level. A short-term acceleration experienced by a child seated in a juvenile vehicle seat (or any other juvenile seat) that moves suddenly is called a shock and is measured in g's.

## GOALS OF THE INVENTION

The invention is aimed notably at overcoming the problems of the prior art.

According to at least one embodiment, it is a goal of the invention to provide a child car seat, which is at least as safe as required by the future European I-Size standard. E.g., this standard should require a 75g deceleration at the level of the head, and a 50g deceleration at the level of the thorax, during application of an impact force to a side of a juvenile seat.

Such a standard has to be respected for every type of juvenile seat, in other words and for example for carrycot, or « shell » or « hull »-shaped baby car seat, or other child car seat.

In particular, it is a goal of the invention to provide a juvenile seat of this kind that reduces the weight, while also optimizing its cost.

## SUMMARY OF THE INVENTION

These goals as well as others that shall appear more clearly here below are achieved by means of a child restraint according to claim 1.

Another embodiment of the invention is defined by a pad according to claim 15.

It must be noticed that according to the invention, the term "diameter" includes, by extension, the inner dimension of a polygon (the diameter of the inscribed circle, or 2 times the apothem...).

Preferentially, 10mum $\leq$ D.

Advantageously, said at least one wall has a substantially uniform thickness A, where 0,1 mm $\leq$ At $\leq$ 5mm.

Preferentially, each crush cell has a plurality of wall-parts delimiting said at least one wall has a height L, where 10mum $\leq$ L.

Thus, if a crush cell is for example polygonal, each wall-part corresponds to a side of said polygonal crush cell, and the wall of said polygonal crush cell is delimited by as many wall-parts as the number of side of the polygon of said polygonal crush cell. According to another example, if a crush cell is cylindrical, its aperture is delimited by only one wall.

In a preferred embodiment, each crush cell has substantially the following dimensions:

- a diameter D = 20 mm,
- a wall thickness A = 3mm, and
- a wall height L=35mm.

Advantageously, each crush aperture in the first strip has a shape belonging to the group comprising:

- hexagon shape,
- octogon shape,
- polygon shape,
- circular shape.

According to a variant of this embodiment, said crush cells are obtained from a crushable designed material, foams belonging to the group comprising:

- extruded polymer products,
- extra cellular polymer substances,
- Polyurethane (PU),
- Thermoplastic Elastomer (TPE),
- Polypropylene (PP),
- Expanded Polypropylene (EPP),
- Expanded Polystyrene (EPS),
- polystyrene (PS),

- or combinations of the foregoing materials.

Preferentially, said crush cells are obtained from an Expanded Polystyrene (EPS) called Styrodur® with a density substantially equal to 33g/L.

Advantageously, said at least one pad extend at least on a side of said child restraint.

Preferentially, said at least one pad is located so as to be close to the head, the shoulder, the thorax, the basin and/or the leg of the occupant.

According to another variant, said crush cells have distinct shapes and/or heights, depending on the part of the body of the occupant to be protected.

Advantageously, said at least one pad has a U-shape to protect the head of the occupant, said pad extending from a first side-wing panel of said juvenile vehicle seat to an opposite second side-wing panel of said juvenile vehicle seat.

According to another variant, said energy-dissipation system comprises a pad having a plurality of zones and/or a plurality of pads, the shape of said zones and/or pads being adapted to a part of the body of the occupant to protect.

Advantageously, the child restraint comprises at least:

- a carrycot, and/or
- a baby « shell » car seat, and/or
- a child car seat of group 1, 2 and/or 3.

According to another variant, said child restraint comprises a seat bottom and a seat back coupled to the seat bottom and arranged to extend upwardly away from the seat bottom, and said at least one pad comprises a pad foundation coupled to the seat back and a ride-down pad coupled to said pad foundation to locate the pad foundation between the seat back and the ride-down pad.

Indeed, according to a preferred embodiment of the invention, such a child restraint comprises:

a juvenile vehicle seat including a seat bottom and a seat back coupled to the seat bottom and arranged to extend upwardly away from the seat bottom and an energy-dissipation system including a pad foundation coupled to the seat back and a ride-down pad coupled to the pad foundation to locate the pad foundation between the seat back and the ride-down pad, the ride-down pad being configured to provide means for controlling movement of an occupant sitting on the juvenile vehicle seat during application of an impact force to a side of the juvenile seat to first cause a shoulder of the occupant to impact the ride-down pad to cause the ride-down pad to deform at a predetermined rate so that a first portion of impact energy associated with the impact force is absorbed and to second cause a head of the occupant to impact the ride-down pad to cause the ride-down pad to deform at the predetermined rate so that a second portion of impact energy associated with the impact force is absorbed and g-loads experienced by the occupant seated in the juvenile vehicle seat are minimized.

It must be noticed that according to the invention, the term "juvenile seat" includes, by extension, even if the occupant is not sat a carrycot, and/or a baby « shell » car seat, and/or a child car seat of group 1, 2 and/or 3. According to a first aspect of this second embodiment, the ride-down pad includes a first crush strip and a second crush strip coupled to the first crush strip to establish an array of crush strips.

In particular, according to this first aspect, it is also possible that the first crush strip includes a series of crush cells coupled to one another.

According to a first example of the above feature, each crush cell in the first strip has a hexagon shape. In addition, it is possible that, each crush cell is formed to include a crush aperture opening into a crush space formed in the crush cell, for example, the crush aperture has a hexagon shape. In addition according to this first example, the ride-down pad is for example made from expanded polypropylene foam.

According to a second example regarding the fact that the first crush strip includes a series of crush cells coupled to one another, each crush cell in the first crush strip includes six walls coupled to one another to establish a crush-cell perimeter. For instance, each wall is about the same length, and/or each wall has a uniform thickness relative to all other walls.

According to a second aspect of this preferred embodiment, the ride-down pad includes a first crush strip including a series of crush cells coupled to one another and a second crush strip including a series of crush cells coupled to one another and each crush cell includes six walls and two walls of one crush cell in the first crush strip are shared with two sequential crush cells in the second crush strip. In particular, according to this second aspect, each crush cell is formed to include a crush aperture opening into a crush space formed in the crush cell and the crush aperture has a hexagon shape. In particular, according to this third aspect,

According to a third aspect of this preferred embodiment, the ride-down pad includes a front surface and a back surface and the front surface is adapted to be impacted by the occupant during application of the impact force. In particular, according to this third aspect, the front surface is defined by a first array of crush strips, and/or the back surface is coupled to the pad foundation, and/or the front surface includes a lower concave surface spaced apart from the seat bottom and an upper convex surface arranged to locate the lower concave surface therebetween.

When the front surface includes a lower concave surface spaced apart from the seat bottom and an upper convex surface arranged to locate the lower concave surface therebetween, it is also possible that the concave surface and the convex surface meet at a point that is tangential to both the concave and the convex surface. In this case, it is furthermore possible that the point is about midway between a top end of the ride-down pad and an opposite bottom end of the ride-down pad, or that the ride-down pad includes a top end positioned to lie in spaced-apart relation above the seat bottom and a bottom end positioned to lie between the top end and the seat bottom and the ride-down pad has a top thickness defined between the front surface and the back surface at the top end of the ride-down pad and a bottom thickness defined between the front surface and the back surface at the bottom end of the ride-down pad.

When the ride-down pad includes a top end positioned to lie in spaced-apart relation above the seat bottom and a bottom end positioned to lie between the top end and the seat bottom and the ride-down pad has a top thickness defined between the front surface and the back surface at the top end of the ride-down pad and a bottom thickness defined between the front surface and the back surface at the bottom end of the ride-down pad, it is also possible that the bottom thickness is relatively smaller than the top thickness.

According to a fourth aspect of this preferred embodiment, the ride-down pad includes a top portion adapted to be impacted by the head of the occupant and a bottom portion adapted to be impacted by the shoulder of the occupant.

In particular, according to this fourth aspect, the top portion includes a front face that is convex and the bottom portion includes a front fact that is concave, or the top portion and the bottom portion define a front surface of the energy-dissipation system, the front surface having a first width at the top portion and a relatively smaller second width at the bottom portion, or the ride-down pad has top thickness at the top portion and a relatively small bottom thickness at the bottom portion.

According to a fifth aspect of this preferred embodiment, the seat back includes a backrest and a headrest, the backrest is arranged to interconnect the headrest and seat bottom and the energy-dissipation system is coupled to the headrest. In particular, according to this fifth aspect, the headrest includes a rear panel coupled to the backrest to extend upwardly away from the backrest, a first side-wing panel coupled to the rear panel to extend outwardly away from the rear panel above the seat bottom, and a second side-wing panel coupled to the rear panel in spaced-apart relation to the first side-wing panel to extend outwardly away from the rear panel above the seat bottom, and the energy-dissipation system is coupled to the first side-wing panel to lie between and the first and second side-wing panels, or the headrest is coupled to the backrest to move up and down relative to the backrest.

More precisely, according to another preferred embodiment of the invention, such a child restraint comprises:

a juvenile vehicle seat including a seat bottom and a seat back coupled to the seat bottom and arranged to extend upwardly away from the seat bottom and an energy-dissipation system including a first force dissipater including a first pad foundation coupled to the seat back and a first ride-down pad coupled to the first pad foundation to locate the first pad foundation between the seat back and the first ride-down pad, the first ride-down pad being configured to provide means for controlling movement of an occupant sitting on the juvenile vehicle seat during application of an impact force to a side of the juvenile seat to first cause a first shoulder of the occupant to impact the ride-down pad to cause the ride-down pad to deform at a predetermined rate so that a first portion of impact energy associated with the impact force is absorbed and to second cause a first side of the occupant's head to impact the first ride-down pad to cause the first ride-down pad to deform at the predetermined rate so that a second portion of impact energy associated with the impact force is absorbed and g-loads experienced by the occupant seated in the juvenile vehicle seat are minimized.

According to a first aspect of this preferred embodiment, the energy-dissipation system further includes a second force dissipater including a second pad foundation coupled to the seat back in spaced-apart relation to the first pad foundation and a second ride-down pad coupled to the second pad foundation to locate the second pad foundation between the seat back and the second ride-down pad, the second ridedown pad being configured to provide means for controlling movement of the occupant sitting on the juvenile vehicle seat during application of the impact force to the juvenile seat to third cause a second shoulder of the occupant to impact the second ride-down pad to cause the second ride-down pad to deform at the predetermined rate so that a first portion of recoil energy associated with a recoil force resulting from the impact force is absorbed and to fourth cause a second opposite side of the occupant's head to impact the second ride-down pad to cause the second ride-down pad to deform at the predetermined rate so that a second portion of recoil energy associated with the recoil force is absorbed and g-loads experienced by the occupant seated in the juvenile vehicle seat are minimized.

In this case, it is also possible that the seat back includes a backrest and a headrest, the backrest is arranged to interconnect the headrest and seat bottom and the energy-dissipation system is coupled to the headrest.

When the seat back includes a backrest and a headrest, the backrest is arranged to interconnect the headrest and seat bottom and the energy-dissipation system is coupled to the headrest, it is also possible according to an example that the headrest includes a rear panel coupled to the backrest to extend upwardly away from the backrest, a first side-wing panel coupled to the rear panel to extend outwardly away from the rear panel above the seat bottom, and a second side-wing panel coupled to the rear panel in spaced-apart relation to the first side-wing panel to extend outwardly away from the rear panel above the seat bottom, the first force dissipater is coupled to the first side-wing panel, and the second force dissipater is coupled to the second side-wing panel.

In this case, according to a particular feature, the first and second side-wing panels and the rear panel cooperate to define an occupant-receiving space therebetween and the occupant-receiving space is adapted to receive the occupant's head and shoulders therein when the occupant is sitting on the juvenile seat. For example, the first and second force dissipaters are made from expanded polypropylene foam.

More precisely, according to another preferred embodiment of the invention, such a child restraint comprises:

a juvenile vehicle seat including a seat bottom and a seat back extending upwardly from the seat bottom, the seat back including a headrest and a backrest extending between the seat bottom and the headrest, the headrest including a first side-wing panel and a second side-wing panel arranged to lie in spaced apart relation to the first side-wing panel and to define an occupant-receiving space therebetween, and

an energy-dissipation system coupled to the headrest, the energy-dissipation system including first and second force dissipaters, the first force dissipater including a first pad foundation coupled to the first side-wing panel and a first ride-down pad coupled to the first pad foundation, the second force dissipater including a second pad foundation coupled to the second side-wing panel and a second ride-down pad coupled to the second pad foundation, and the first and second force dissipaters are arranged to extend into the occupant-receiving space toward one another.

In particular, according to a first aspect of this preferred embodiment, it is also possible that each of the first and second ride-down pads include a monolithic array of crush strips. According to a first example of this first aspect of this fourth embodiment, the array of crush strips is formed by two crush strips coupled together. More precisely, each crush strip can include for instance a series of crush cells coupled to one another, wherein each crush cell has a hexagon shape or wherein each crush cell is formed to include a crush aperture opening into a crush space formed in the crush cell, or wherein each crush cell includes six walls coupled to one another to establish a crush-cell perimeter.

When each crush cell includes six walls coupled to one another to establish a crush-cell perimeter, each wall is about the same length or has a uniform thickness relative to all other walls.

According to a second example of this first aspect of this preferred embodiment, when the array of crush strips is formed by two crush strips coupled together, it is also possible that each of the first and second ride-down pads includes a front surface and a back surface and the front surface configured to be impacted by the occupant during application of the impact force.

In this case, the front surface is defined by the array of crush strips, or includes a lower concave surface and an upper convex surface.

In particular, according to a second aspect of this preferred embodiment, it is also possible that the energy-dissipation system further includes a third force dissipater including a third pad foundation coupled to the headrest between the first and second side-wing panels and a third ride-down pad coupled to the third pad foundation.

According to a first example of this second aspect of this preferred embodiment, the first and second force dissipaters are configured to be mirror images of each other, or the third ride-down pad includes a first crush strip coupled to the third pad foundation and a second crush strip coupled to the third pad foundation in spaced-apart relation to the first crush strip and the first and second crush strips cooperate to establish an array of crush strips.

In this later case, it is also possible that the second crush strip, and the third pad foundation cooperate to define a channel therebetween. More precisely, it is furthermore possible that the first crush strip has a first strip width, the second crush strip has a second strip width, and the first and second strip widths are about equal, and also that the channel has a channel width that is about equal to the first strip width.

According to a second example of this second aspect of this preferred embodiment, wherein the headrest further includes a rear panel coupled to the backrest and arranged to extend between the first and second side-wing panels and the third force dissipater is coupled to the rear panel of the headrest.

In this case, it is also possible that the third pad foundation is arranged to interconnect the third ride-down pad to the headrest to cause the third ride-down pad to extend away from the third pad foundation away from the seat back. More precisely, it is also possible that the third force dissipater is arranged to extend into the occupant-receiving space between the first and second force dissipaters.

According to a third example of this second aspect of this preferred embodiment the first, second, and third force dissipaters are made from expanded polypropylene foam.

In other words:

- in some illustrative embodiments, the energy-dissipation system includes a first force dissipater configured to provide means for absorbing external energy applied to the juvenile vehicle seat. The force dissipater is coupled to a headrest included in the juvenile vehicle seat,

- in some illustrative embodiments, the energy-dissipation system includes a second force dissipater. The second force dissipater is coupled to the headrest of the juvenile vehicle seat in spaced-apart relation opposite the first force dissipater to define a space therebetween. The space is configured to receive a head and shoulders of an occupant sitting in the juvenile vehicle seat,

- in illustrative embodiments, the first force dissipater includes a ride-down pad and a pad foundation. The pad foundation is configured to provide means for supporting the ride-down pad in spaced-apart relation to the headrest. The ride-down pad is coupled to the pad foundation and arranged to extend away from the headrest toward the second force dissipater. In illustrative embodiments, the ride-down pad includes an array of crush strips, with each crush strip of the ride-down pad including a series of hexagon-shaped structures coupled to one another to establish a crush strip,

- in illustrative embodiments, the second force dissipater includes a second ride-down pad and a second pad foundation similar in size, shape, and pattern to the ride-down pad and pad foundation of the first force dissipater. The second ride-down pad includes an array of crush strips similar in size, shape, and pattern to the array of crush strips included in the ride-down pad of the first force dissipater,

- in illustrative embodiments, the energy-dissipation system also includes a third force dissipater. The third force dissipater is coupled to the headrest and is arranged to lie in the space between the first and second force dissipaters.

- in illustrative embodiments, the third force dissipater includes a third ride-down pad and a third pad foundation. The third pad foundation is configured to provide means for supporting the third ride-down pad in spaced apart relation to the headrest. In illustrative embodiments, the third ride-down pad includes a series of laterally spaced-apart, vertically extending crush strips, which cooperate to define the array of crush strips in the third force dissipater. In illustrative embodiments, the width of each crush strip is about equal to the width of the space provided between each pair of adjacent crush strips.

Additional features of the present disclosure will become apparent to those skilled in the art upon consideration of illustrative embodiments exemplifying the best mode of carrying out the disclosure as presently perceived.

## LIST OF FIGURES

The detailed description particularly refers to the accompanying figures in which:

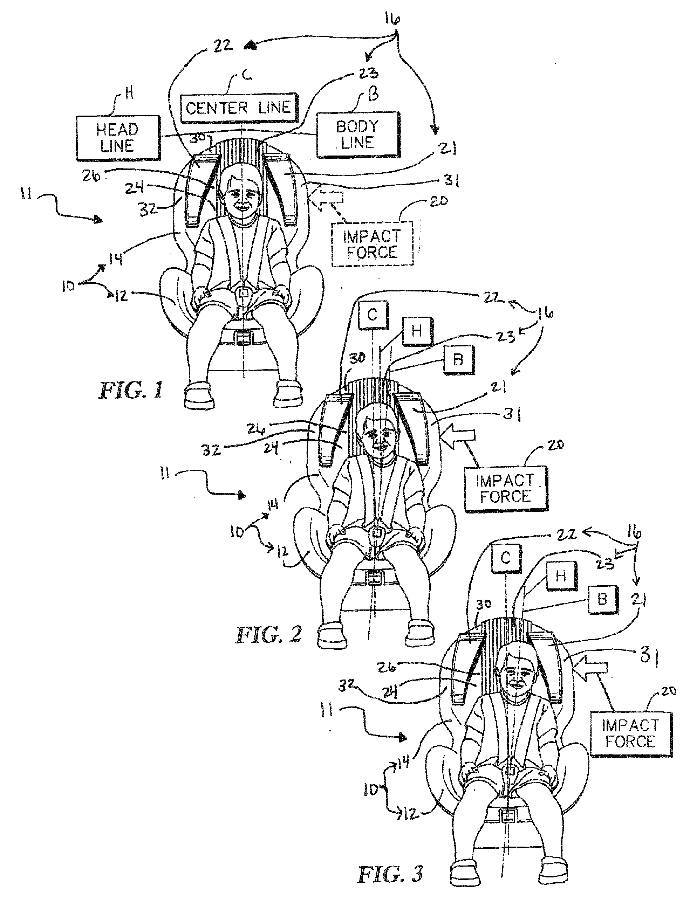

- Fig. 1 is a front perspective view of an embodiment of a child restraint including a juvenile vehicle seat having a seat bottom for an occupant or child to sit on and a seat back extending upwardly from the seat bottom, the seat back including a backrest and a headrest coupled to the backrest, the juvenile seat also including an energy-dissipation system in accordance with the present disclosure coupled to the headrest, the energy-dissipation system including a first pad foundation mounted on a first side-wing panel of the headrest, a first ride-down pad coupled to the first pad foundation, a second pad foundation mounted on a second side-wing panel of the headrest, and a second ride-down pad coupled to the second pad foundation, the head and body of the occupant substantially aligned with a center line of the juvenile vehicle seat in a position associated with normal riding conditions, the energy-dissipation system configured to minimize the movement of the child's head and upper body when the juvenile vehicle seat is subject to an impact force (dashed arrow) as seen in Figs. 2 and 3;

- Fig. 2 is a front perspective view of the child restraint of Fig. 1 just after an impact force (solid arrow) has been applied to the juvenile vehicle seat and showing that such force causes an upper body or shoulder portion of a child sitting in the juvenile vehicle seat to move in a direction opposite of the impact force relative to the juvenile vehicle seat such that the child's body line is no longer aligned with the center line of the juvenile vehicle seat and the child's upper body or shoulder portion engages with a lower, concave surface of the first ride-down pad to slow the movement of the child's upper body portion and absorb some of the energy from such movement, the child's head also moving in the direction opposite of the impact force relative to the juvenile vehicle seat as the motion of the child's upper body portion pulls the child's head toward the first ride-down pad such that the child's head line is also no longer aligned with the center line of the juvenile vehicle seat;

- Fig. 3 is a front perspective view of the child restraint of Fig. 2 but at a point in time that is after Fig. 2, showing that the child's head line has aligned with the child's body line and the head of the child sitting in the juvenile vehicle seat has engaged with a upper, convex surface of the first ride-down pad that is further away from the first side-wing panel of the headrest than the lower, concave surface of the first ride-down pad, the child's head engaging with the upper, convex surface of the first ride-down pad to slow movement of the child's head in the direction opposite of the impact force and absorb some of the energy from such movement, the child's upper body or shoulder portion also still being engaged with the lower, concave surface of the first ride-down pad;

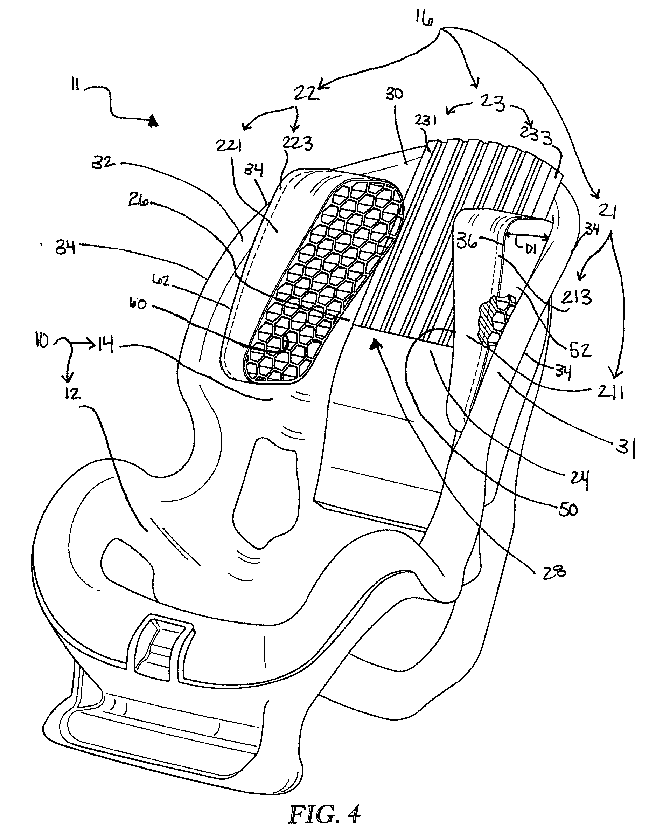

- Fig. 4 is a front-left perspective view of the child restraint of Figs. 1-3 and more clearly shows the juvenile vehicle seat having a seat bottom and a seat back extending upwardly from the seat bottom and the energy-dissipation system coupled to the seat back, and showing that the seat back comprises a backrest coupled to the seat bottom and a headrest coupled to the backrest and showing that the energy-dissipation system comprises a first pad foundation mounted on an inner wall of a first side-wing panel included in the headrest, a first ride-down pad coupled to the first pad foundation and extending away from the first side-wing panel, a second pad foundation mounted on an inner wall of an opposite, second side-wing panel included in the headrest, a second ride-down pad coupled to the second pad foundation and extending away from the second side-wing panel, a third pad foundation mounted on a forward-facing wall of a rear panel extending between the first and second side-wing panels and included in the headrest, and a third ride-down pad coupled to the third pad foundation and extending away from the rear panel;

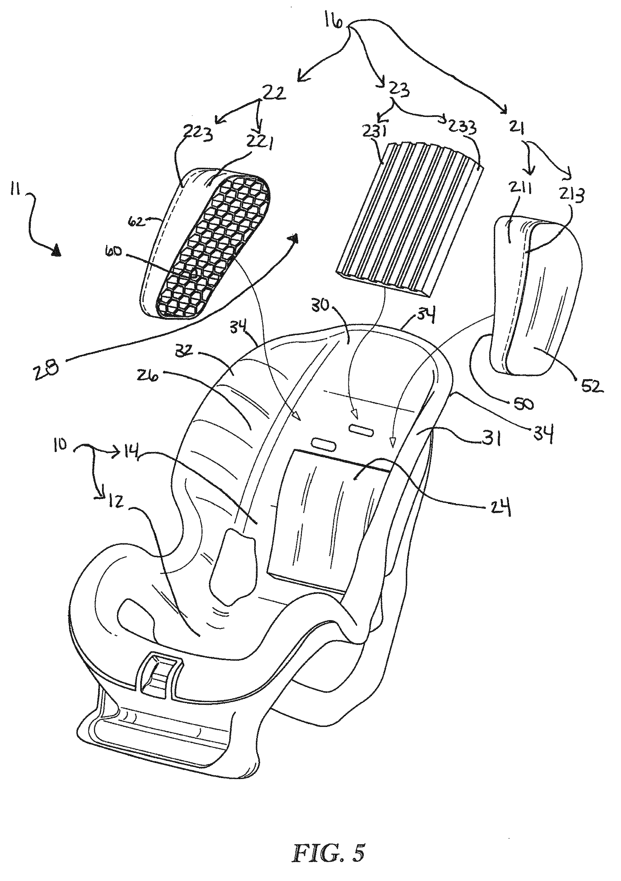

- Fig. 5 is an exploded perspective assembly view of the child restraint of Fig. 4 showing that the child restraint includes, from top to bottom, an energy-dissipation system comprising the first pad foundation coupled to the first ride-down pad, the second pad foundation coupled to the second ride-down pad, and the third pad foundation coupled to the third ride-down pad and positioned to lie between the first and second ride-down pads, the first pad foundation coupled to the first ride-down pad and the second pad foundation coupled to the second ride-down pad being mountable on the inner walls of the side-wing panels in the headrest, the third pad foundation coupled to the third ride-down pad being mountable on the forward-facing wall of the seat back, the child restraint also including a juvenile seat comprising the seat back including the headrest and the backrest, and a seat bottom;

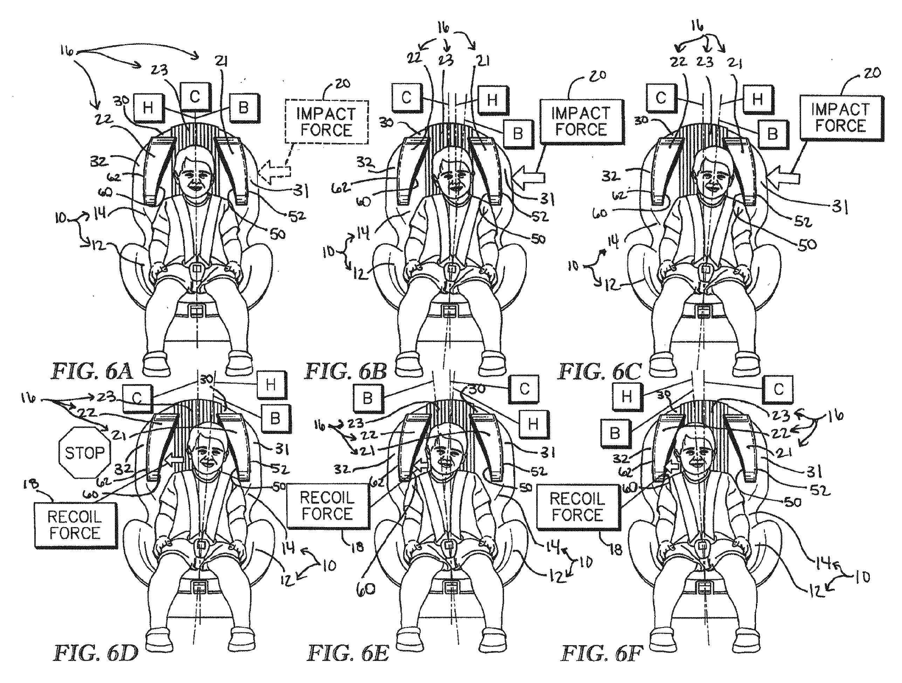

- Figs. 6A-6F are a series of views showing the energy-dissipation system of Figs. 4 and 5 according to embodiments, which do not form part of the invention, but which are useful for understanding the invention, and its effect on a child seated in the child restraint when an impact force is applied to the child restraint;

- Fig. 6A is a front elevation view of the child restraint and showing a child in the juvenile vehicle seat, the child restraint including the energy-dissipation system and the child's head and upper body portion being positioned between the first ride-down pad and the second ride-down pad prior to an impact force (dashed arrow) being applied to the child restraint, the child's head and upper body aligned with and existing along a center-line axis that is generally perpendicular to the seat bottom of the juvenile vehicle seat;

- Fig. 6B is a front elevation view of the child restraint of Fig. 6A just after an impact force (solid arrow) has been applied to the child restraint and showing the child's upper body or shoulder has engaged with the first ride-down pad as a result of the impact force being applied to the child restraint in a direction opposite of the movement of the child's upper body, the child's head also moving in a direction toward the first ride-down pad such that both the child's head and body lines are not aligned with the center-line axis;

- Fig. 6C is a front elevation view of the child restraint of Fig. 6A at a point in time just after the view in Fig. 6B, showing the impact force (solid arrow) causes the child's head to engage with the first ride-down pad in addition to the child's upper body, the child's head and upper body being angled toward the first ride-down pad with respect to the center-line axis as a result of the impact force and showing the first ride-down pad engages with the child's head at a point closer to the center-line axis than the distance between the center-line axis and the first side-wing panel of the vehicle seat;

- Fig. 6D is a front elevation view of the child restraint of Fig. 6A at a point after the impact force is no longer applied to the child restraint and the child restraint is subject to a recoil or deflection force (solid arrow) as the vehicle comes to a stop, the recoil force being in a direction opposite of the direction the child's body and head traveled as a result of the impact force, the recoil force causing the child's head and body to be moved in the direction of the recoil force;

- Fig. 6E is a front elevation view of the child restraint of Fig. 6A at a point after the view in Fig. 6D showing the recoil force (solid arrow) has caused the child's body line to shift from angling toward the first side-wing panel to angling toward the second side-wing panel, the child's shoulder engaging with the second ride-down pad as a result of the recoil force being applied in a similar but opposite manner as that of the impact force in Fig. 6B, and showing the child's head line is still slightly angled toward the first side-wing panel;

- Fig. 6F is a front elevation view of the child restraint of Fig. 6A at a point just after the view in Fig. 6E, showing the recoil force (solid arrow) causes the child's head line to shift from angling toward the first side-wing panel to angling toward the second side-wing panel, the child's head engaging with the second ride-down pad in addition to the child's upper body portion, the child's head line and body line being again aligned and angled with respect to the center-line axis as a result of the recoil force, and showing the angular distance the child's head line travels from Fig. 6E to Fig. 6F due to the recoil force is less than the angular distance between the child's head line in Fig. 6E and the second side-wing panel of the vehicle seat;

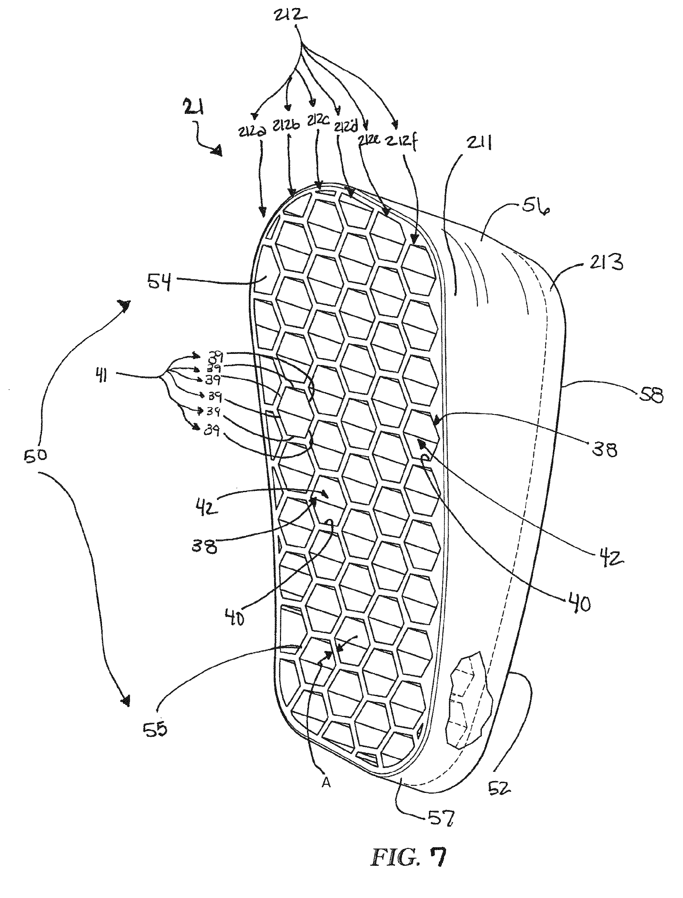

- Fig. 7 is a perspective view of a portion of the energy-dissipation system of Figs. 4 and 5 and showing the energy-dissipation system includes a first pad foundation and a first ride-down pad, the first ride-down pad including an array of outwardly projecting crush strips and the first pad foundation including a substrate that provides a means for supporting the array in spaced-apart relationship, the energy-dissipation system also including a top and bottom surface, the first ride-down pad arranged to extend away from the first side-wing panel of the vehicle seat toward the second side-wing panel of the vehicle seat when this portion of the energy-dissipation system is coupled to the first side-wing panel of the vehicle seat to extend generally parallel to the top and bottom surfaces;

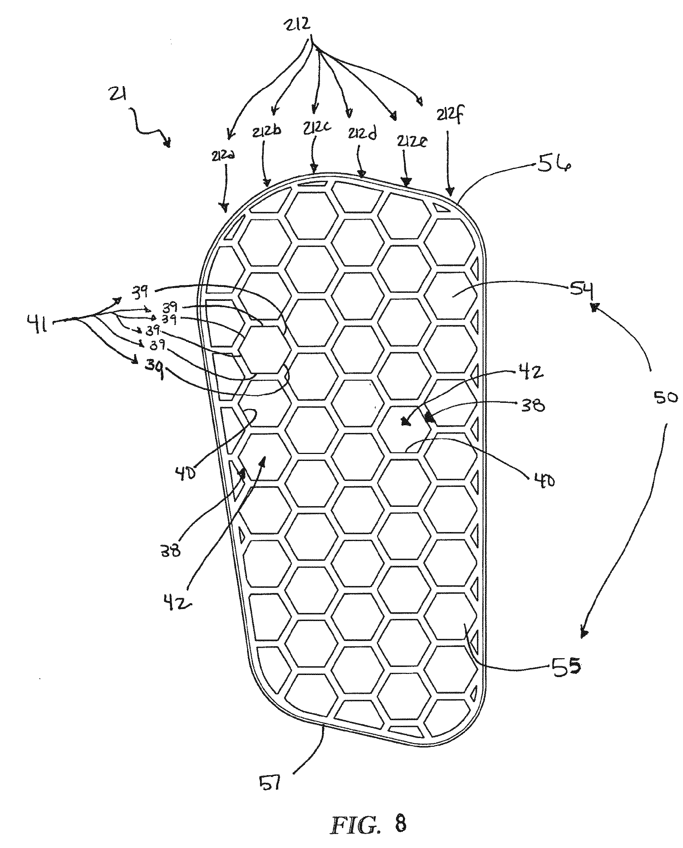

- Fig. 8 is a front elevation view of the portion of the energy-dissipation system of Fig. 7 and showing the crush strips of the first ride-down pad being vertically oriented and formed by a series of hexagon-shaped structures or crush cells coupled to one another, the crush cells formed to include a crush aperture or a hexagon-shaped crush aperture that opens into a crush space formed in the crush cells, the crush cells having six walls of having a generally uniform thickness;

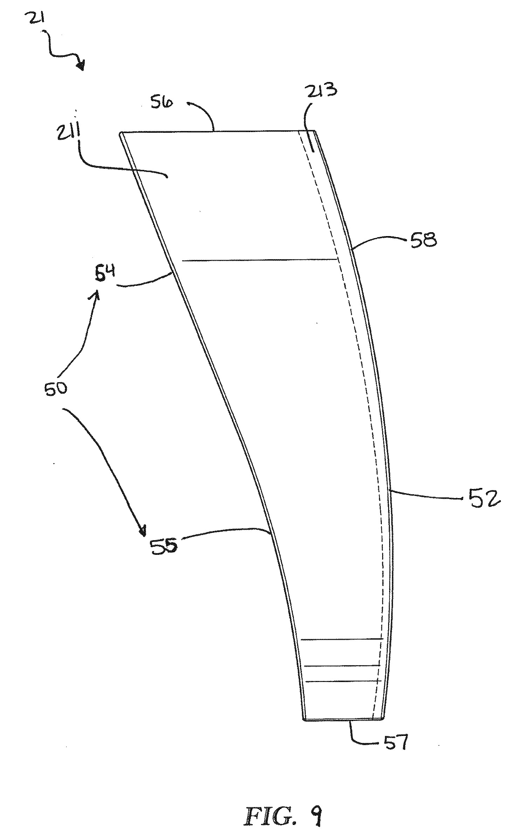

- Fig. 9 is a left elevation view of the portion of the energy-dissipation system of Fig. 7, showing the first ride-down pad includes a lower, concave surface and an upper, convex surface on a side of the ride-down pad that faces towards the child when this portion of the energy-dissipation system is coupled to the first side-wing panel of the vehicle seat;

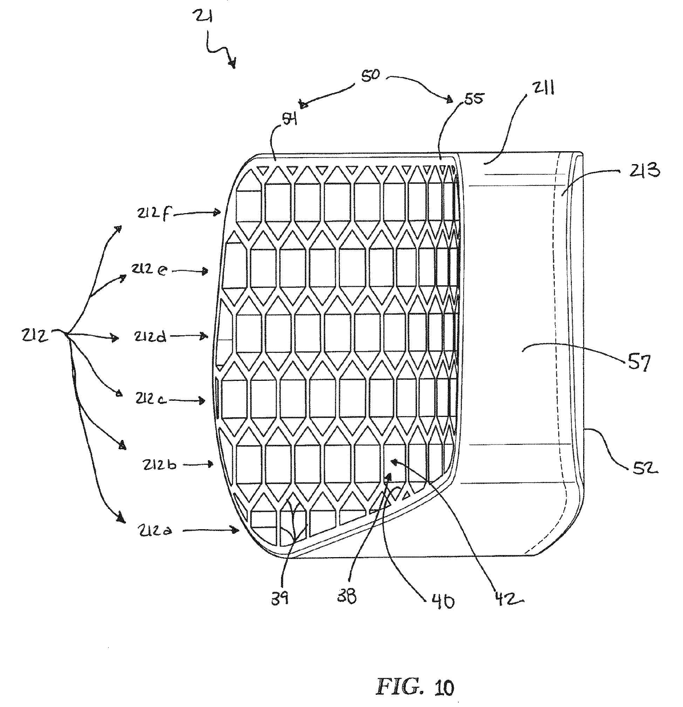

- Fig. 10 is a bottom view of the portion of the energy-dissipation system of Fig. 7 showing the array of outwardly projecting crush strips and the increase in depth of this portion of the energy-dissipation system as it extends upward in a direction away from the bottom surface of this portion of the energy-dissipation system;

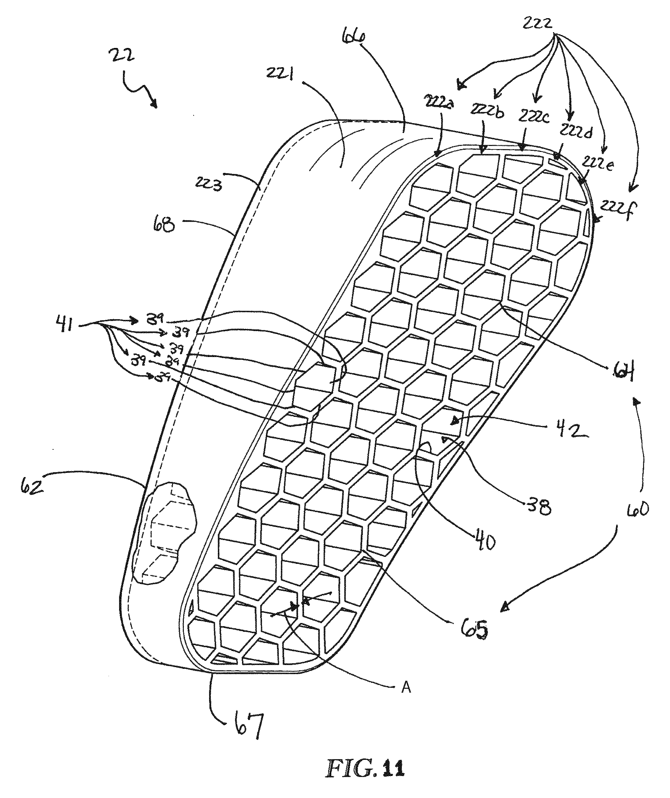

- Fig. 11 is a perspective view of a portion of the energy-dissipation system of Figs. 4 and 5 and showing the energy-dissipation system includes a second pad foundation and a second ride-down pad, the second ride-down pad including an array of outwardly projecting crush strips and the second pad foundation including a substrate that provides a means for supporting the array in spaced-apart relationship, the energy-dissipation system also including a top and bottom surface, the second ride-down pad arranged to extend away from the second side-wing panel of the vehicle seat toward the first side-wing panel of the vehicle seat when this portion of the energy-dissipation system is coupled to the second side-wing panel of the vehicle seat to extend generally parallel to the top and bottom surfaces;

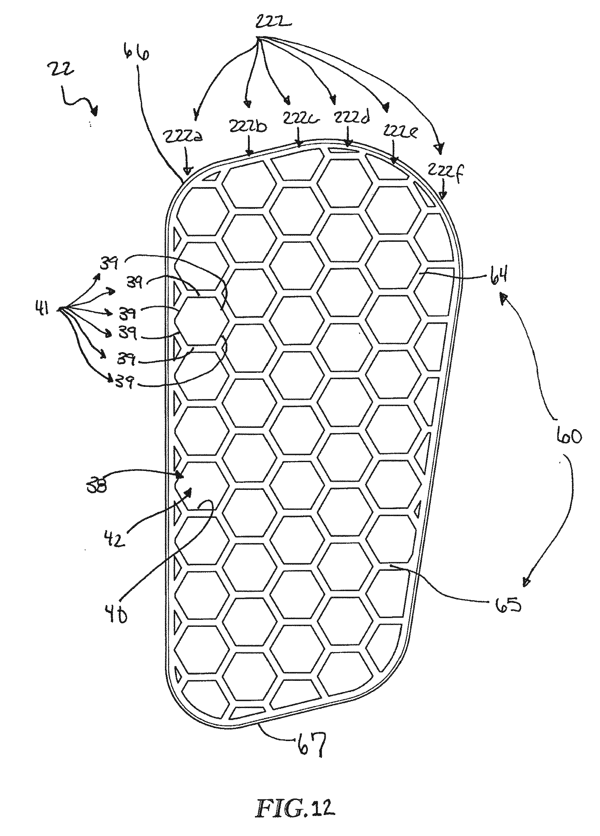

- Fig. 12 is a front elevation view of the portion of the energy-dissipation system of Fig. 11 and showing the crush strips of the second ride-down pad being vertically oriented and formed by a series of hexagon-shaped structures or crush cells coupled to one another, the crush cells formed to include a crush aperture or a hexagon-shaped crush aperture that opens into a crush space formed in the crush cells, the crush cells having six walls of having a generally uniform thickness;

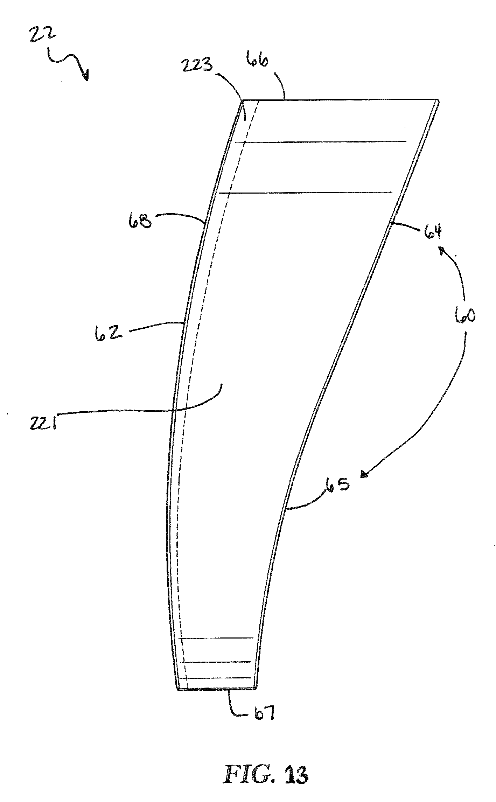

- Fig. 13 is a left elevation view of the portion of the energy-dissipation system of Fig. 11, showing the second ride-down pad includes a lower, concave surface and an upper, convex surface on a side of the second ride-down pad that faces towards the child when this portion of the energy-dissipation system is coupled to the second side-wing panel of the vehicle seat;

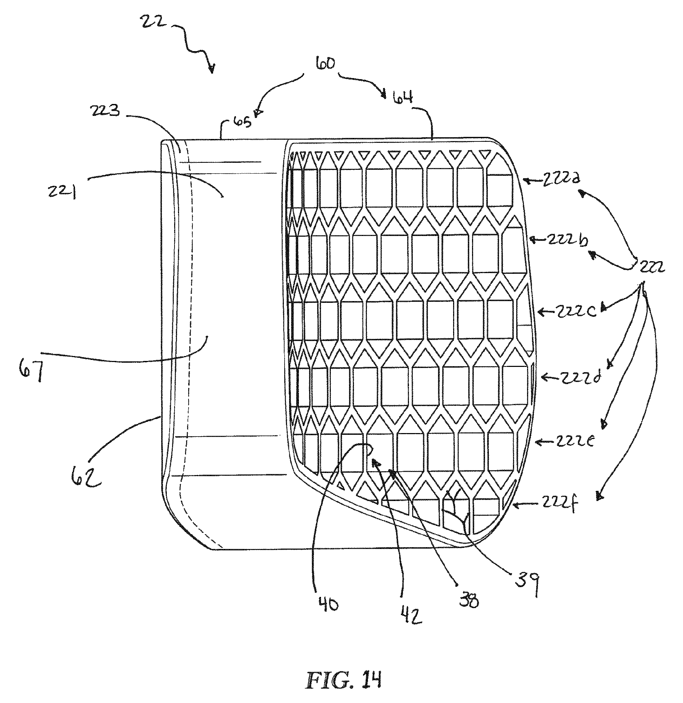

- Fig. 14 is a bottom view of the portion of the energy-dissipation system of Fig. 11 showing the array of outwardly projecting crush strips and the increase in depth of this portion of the energy-dissipation system as it extends upward in a direction away from the bottom surface of this portion of the energy-dissipation system;

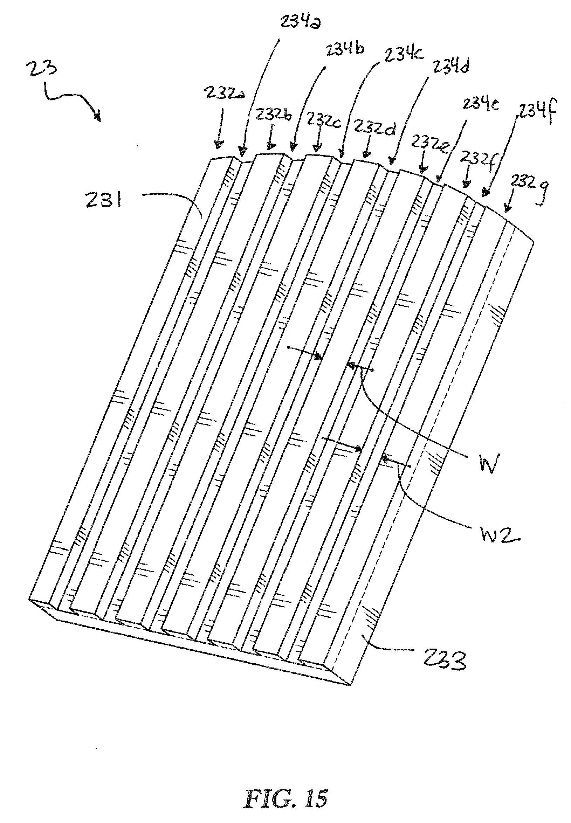

- Fig. 15 is a perspective view of the third pad foundation and third ride-down pad included in the energy-dissipation system of Figs. 4 and 5 according to embodiments, which do not form part of the invention, but which are useful for understanding the invention, the third ride-down pad including an array of outwardly projecting crush strips arranged to extend away from the third pad foundation when the third pad foundation is coupled to a rear panel of the headrest of the child restraint and showing the crush strips lie is spaced apart relationship to each other and define channels therebetween;

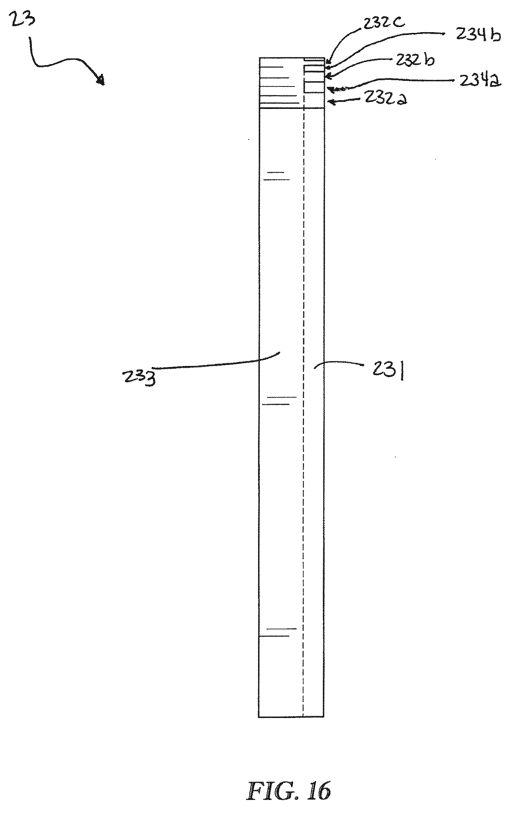

- Fig. 16 is a left elevation view of the third pad foundation and third ride-down pad of Fig. 15, according to embodiments, which do not form part of the invention, but which are useful for understanding the invention, and showing the third pad foundation is coupled to the array of outwardly projecting crush strips of the third-ride down pad and configured to provide a means for interconnecting the crush strips in spaced-apart relation to each other;

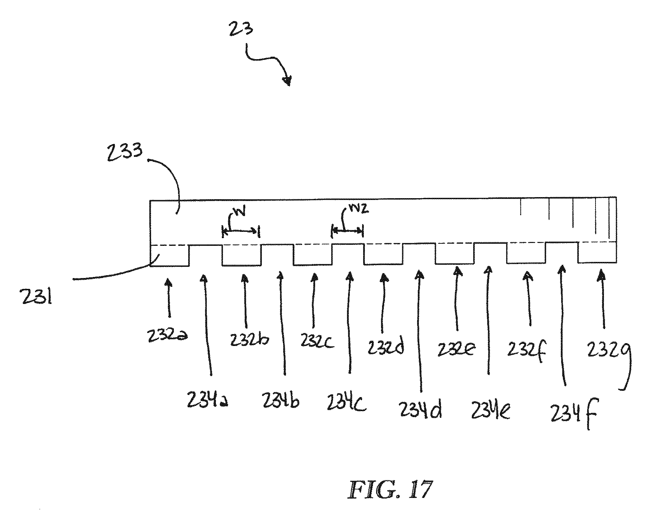

- Fig. 17 is a top plan view of the third pad foundation and third ride-down pad of Fig. 15, according to embodiments, which do not form part of the invention, but which are useful for understanding the invention, and showing the crush strips are spaced apart from one another to define a companion slot therebetween, the crush strips and the companion slots extending the full length of the third ride-down pad;

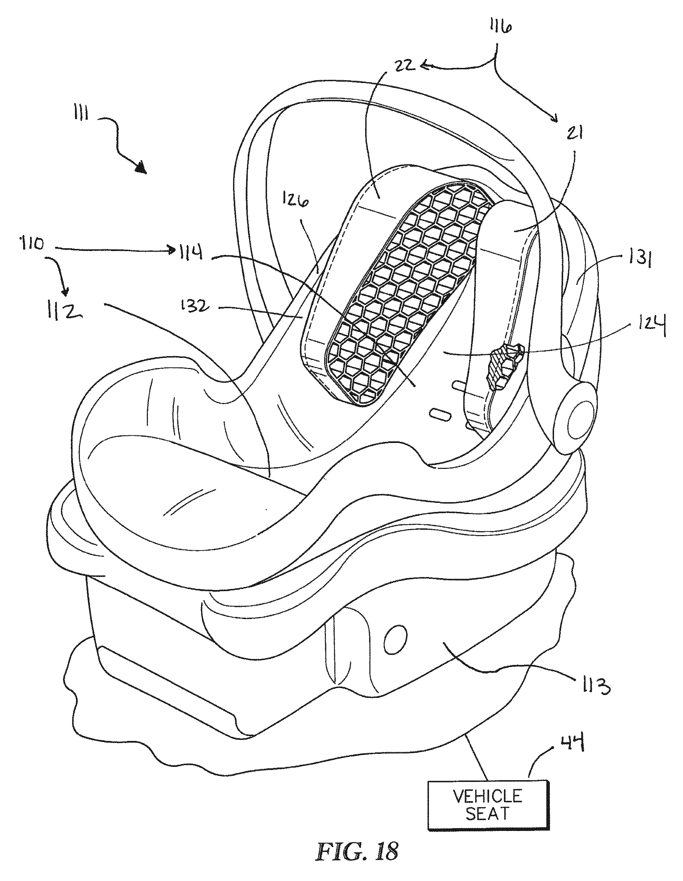

- Fig. 18 is a perspective view of an other embodiment of a child restraint including a juvenile vehicle seat for supporting an infant and having a seat bottom and a seat back extending upwardly from the seat bottom, a base adapted to set on an underlying seat in a vehicle and support the juvenile vehicle seat, and an energy-dissipation system in accordance with another embodiment of the present disclosure coupled to the seat back and showing that the seat back comprises a backrest coupled to the seat bottom and a headrest coupled to the backrest and that the energy-dissipation system comprises a first pad foundation mounted on an inner wall of a first side-wing panel included in the headrest and coupled to a first ride-down pad and a second force pad foundation mounted on an inner wall of an opposite, second side-wing panel included in the headrest and coupled to a second ride-down pad; and

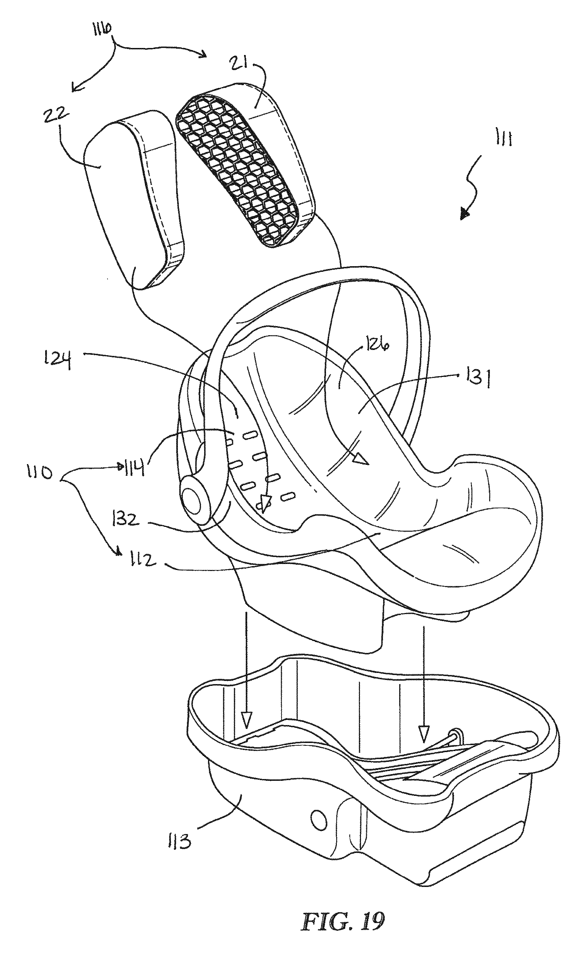

- Fig. 19 is an exploded perspective assembly view of the child restraint of Fig. 18 showing that the child restraint includes, from top to bottom, an energy-dissipation system comprising the first pad foundation coupled to the first ride-down pad, the second pad foundation coupled to the second ride-down pad, the juvenile seat, and the base for supporting the juvenile seat and suggesting that the first pad foundation is coupled to an inner wall of the first side-wing panel included in the headrest and that the second pad foundation is coupled to an inner wall of the second side-wing panel included in the headrest.

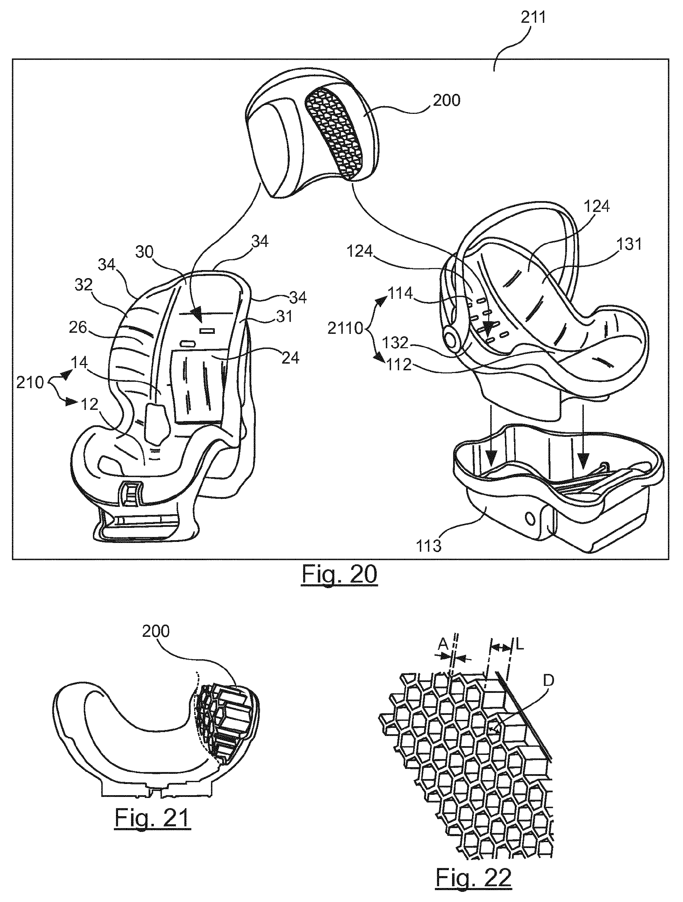

- Fig 20 is a perspective view of another embodiment of a child restraint including a juvenile vehicle seat, like one of the juvenile vehicle seat of Figs 4 or 18, for supporting an infant and having for example a seat bottom and a seat back extending upwardly from the seat bottom, and optionally a base adapted to set on an underlying seat in a vehicle and support the juvenile vehicle seat, and an energy-dissipation system in accordance with another embodiment of the present disclosure coupled to the seat back and showing that for example the seat back comprises a backrest coupled to the seat bottom and a headrest coupled to the backrest and that the energy-dissipation system comprises a single pad foundation mounted on the juvenile vehicle seat and extending for example from a first side-wing panel included in the headrest and for example coupled to a first ride-down pad, to an opposite second side-wing panel included in the headrest and coupled to a second ride-down pad and optionally coupled in the middle to a third ride-down pad positioned between the first and second ride-down pads, the third ride-down pad being mountable on the forward-facing wall of the seat back;

- Fig 21 is a side view of the energy-dissipation system of Fig 20 comprising a single pad foundation mounted extending from a first side-wing panel included in the headrest and coupled to a first ride-down pad, to an opposite second side-wing panel included in the headrest and coupled to a second ride-down pad and optionally coupled in the middle to a third ride-down pad positioned between the first and second ride-down pads, the third ride-down pad being mountable on the forward-facing wall of the seat back.

- Fig 22 is a perspective view of the crush strips used in an energy-dissipation system of at least one embodiment of the present invention and showing the crush strips being vertically oriented and formed by a series of hexagon-shaped structures or crush cells coupled to one another, the crush cells formed to include a crush aperture or a hexagon shaped crush aperture that opens into a crush space formed in the crush cells, the crush cells having six walls of having a generally uniform thickness labeled A, an height labeled L, and a diameter labeled D.

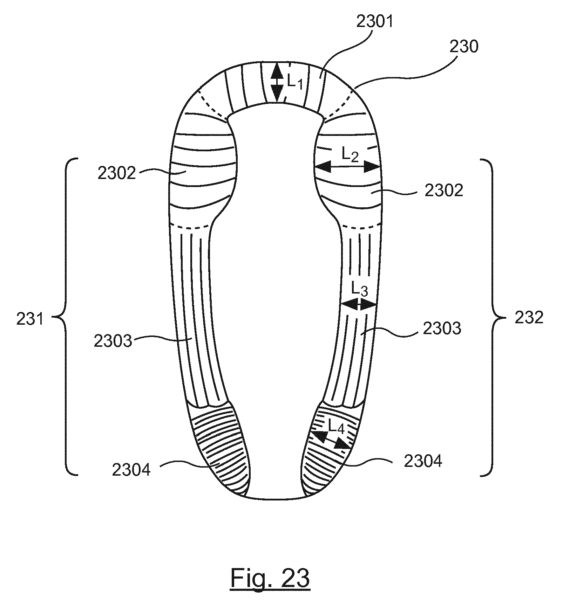

- Fig 23 is a top view of another embodiment of a child restraint according to the present invention, wherein an energy-dissipation system is implemented along the edges of a carrycot, with different thicknesses depending on the part of the occupant to protect.

## DETAILED DESCRIPTION

A first embodiment of a child restraint 11 is shown in Figs. 1-5 and comprises a juvenile vehicle seat 10 and a first embodiment of an energy-dissipation system 16 that is coupled to the juvenile vehicle seat 10. Another embodiment of a child restraint 111 is illustrated in Figs. 18-19 and comprises a juvenile vehicle seat 110 and another embodiment of an energy-dissipation system 116 that is coupled to the juvenile vehicle seat 110. Another embodiment of a child restraint 211 is illustrated in Fig. 20 and comprises a juvenile vehicle seat (210, 2110) and another embodiment of an energy-dissipation system 200 that is coupled to the juvenile vehicle seat (210, 2110). It is within the scope of the present disclosure to mount energy-dissipation systems 16, 116, 200 on a juvenile seat or other device to dissipate energy transferred to such a seat or apparatus by means of an external impact force applied to the seat or apparatus.

Child restraint 11 includes juvenile vehicle seat 10 and energy-dissipation system 16 as shown in Figs. 1-5. In illustrative embodiments, juvenile vehicle seat 10 includes a seat bottom 12 and a seat back 14 extending upwardly away from seat bottom 12. Energy-dissipation system 16 is coupled to seat back 14 of juvenile vehicle seat 10 as shown in Fig. 4 and suggested in Fig. 5. Energy-dissipation system 16 comprises first, second, and third force dissipaters 21, 22, 23 that are designed to minimize the g-loads experienced by a child seated on seat bottom 12 of juvenile vehicle seat 10 during exposure of juvenile vehicle seat 10 to an external impact force 20.

As suggested in Fig. 4, energy-dissipation system 16 comprises a first force dissipater 21, a second force dissipater 22, and a third force dissipater 23. In the illustrated embodiment, energy-dissipation system 16 is coupled to seat back 14 of juvenile vehicle seat 10 and, in particular, to a headrest 26 included in seat back 14.

In illustrative embodiments, energy-dissipation system 16 is mounted on an inside portion of juvenile vehicle seat 10 as suggested, for example, in Figs. 4 and 5. It is within the scope of the present disclosure to couple one or more of the energy dissipaters included in energy-dissipation system 16 on other portions of juvenile vehicle seat 10 or other juvenile seat or device to facilitate absorption of energy caused by external impact forces applied to such seats or devices. It is also within the scope of the present disclosure to vary the number of force dissipaters coupled to juvenile vehicle seat.

In the illustrated embodiment, seat back 14 of juvenile vehicle seat 10 includes a backrest 24 arranged to extend upwardly from seat bottom 12 and a headrest 26 coupled to an upper portion of backrest 24 and arranged to lie in spaced-apart relation to seat bottom 12. As shown in Figs. 1 and 2, headrest 26 is coupled to backrest 24 in a fixed position. First force dissipater 21 is coupled to an inner wall of a first side-wing panel 31 included in headrest 26. Second force dissipater 22 is coupled to an inner wall of a second side-wing panel 32 included in headrest 26 to lie in spaced-apart confronting relation to first force dissipater 21 as suggested in Figs. 1 and 1A. Third force dissipater 23 is coupled to an inner wall of a rear panel 30 as shown in Fig. 1. Third force dissipater 23 is arranged to lie and extend between first and second force dissipaters 21, 22. It is also within the scope of the present disclosure to provide a seat back comprising a headrest mounted on the backrest for up-and-down movement relative to the backrest.

As illustrated in Figs. 1-3 and 6A-6F, energy-dissipation system 16 is configured to absorb energy from external impact forces 20 by providing means for deforming the first, second, and/or third force dissipaters 21, 22, and/or 23 at a predetermined rate when exposed to the external impact force 20 so that they first, second, and/or third force dissipaters 21, 22, and/or 23 absorb external energy associated with the external impact force 20 to reduce g-loads experienced by a child seated in the juvenile vehicle seat 10. First, second, and/or third force dissipaters 21, 22, and/or 23 are configured to deform at a predetermined deformation rate when exposed to the external impact force 20. The resulting deformation reduces the impact of the child's head as it is moves in the direction the side-wing panel 31, 32. The deformation also minimizes the acceleration of the child's head in the direction opposite of the impact force 20 during a subsequent recoil force 18.

Energy-dissipation system 16 minimizes acceleration of a child's head by reducing the distance of travel for a child's head and by absorbing impact energy to minimize deflection forces after a child's head has impacted energy-dissipation system 16. As seen in Figs. 1-3, under normal riding conditions, the head and body of a child riding in the juvenile vehicle seat 10 align with a center-line axis C of juvenile vehicle seat 10. As show in Figs. 1-3, center-line axis C is substantially perpendicular to the seat bottom 12 of juvenile vehicle seat 10.

As illustrated in Figs. 1-3, the angle and movement of the head and body of a child seated in juvenile vehicle seat 10 can be represented in part by a head-line axis H and a body-line axis B. For example, head-line axis H in Figs. 1-3 identifies an axis that extends through the middle of the child's head and substantially represents the vertical center of mass for the child's head. Similarly, body-line axis B in Figs. 1-3 identifies an axis that extends through the middle of the child's body and substantially represents the vertical center of mass for the child's body. Prior to a collision, the child's head-line axis H and body-line axis B are coplanar with center-axis line C.

During a collision or other incident, application of an external impact force 20 to juvenile vehicle seat 10 causes juvenile vehicle seat 10 to move in the direction of impact force 20 relative to an occupant. As a result of this movement, the occupant's head-line axis H and body-line axis B move toward first force dissipater 21. Such movement causes occupant to move toward and engage first force dissipater 21. This impact causes energy to be transferred from the impacting object (such as the occupant's head) to first force dissipater 21, as suggested in Figs. 1-4. First force dissipater 21 absorbs that transferred energy to minimize the magnitude of a resulting force applied to a child seated in juvenile vehicle seat 10 during the collision. First force dissipater 21 functions to minimize the g-loads (acceleration) experienced by the child seated on seat bottom 12 of juvenile vehicle seat 10 during exposure of juvenile vehicle seat 10 to external impact force 20 as suggested in Figs. 1-3. First force dissipater 21 also functions to maximize the time interval (i.e., ride-down time) between the moment the impacting object strikes force dissipater 21 and the moment that resulting force reaches zero.

As illustrated fully in Figs 6A-6F, inclusion of first and second force dissipaters 21 and 22 in energy-dissipation system 16 also minimizes the distance of travel for a child's head during a collision. Prior to a collision, a child's head and body are generally positioned to be aligned with center-line axis C, as seen in Figs. 1 and 6A. Immediately following a collision, the juvenile vehicle seat 10 will be moved in the direction of the impact force 20 relative to the child, causing the child's upper body and head to move in the direction of first force dissipater 21. Energy-dissipation system 16 minimizes the distance of travel of a child's head from a first, resting position aligned with center-line axis C as seen in Fig 6A, to a second, angled position when the child's head engages with first force dissipater 21 after the external impact force 20 has been applied as seen in Fig. 6C. In addition, if there is a substantial recoil force 18 from the child's head when it rebounds or deflects from engagement with first force dissipater 21, energy-dissipation system 16 minimizes the distance of travel for a child's head from the second, angled position as seen in Fig. 6C to a third, counter-angled position engaging with second force dissipater 22 as a result of recoil force 18 in a direction opposite of first force dissipater 21, as seen in Fig. 6F.

Energy-dissipation system 16 also minimizes the maximum difference between a child's head-line axis C and body-line axis B during a collision. As seen in Figs. 2 and 3, energy-dissipation system 16 is configured to cause a child's body or shoulders to first impact first force dissipater 21 before a child's head impacts first force dissipater 21. In this way, first force dissipater 21 limits the angle or degree of movement of the child's body-line axis B away from center-line axis C and the child's head-line axis H. As the child's head continues to move toward first force dissipater 21, the angle between the child's head-line axis H and body-line axis B continues to shrink because the child's body-line axis B is held in place by first force dissipater 21, thereby reducing g-loads or other similar forces on the child's head, such as whiplash.

As suggested in Fig. 7, first force dissipater 21 includes a first pad foundation 213 coupled to the seat backrest 24 and a first ride-down pad 211. First ride-down pad 211 includes an array of outwardly projecting crush strips 212. First ride-down pad 211 of outwardly projecting crush strips 212 is arranged to extend away from first side-wing panel 31 toward second side-wing panel 32. As shown in Figs. 7 and 8, first ride-down pad 211 includes a series of vertically oriented crush strips 212a, 212b, 212c, 212d, 212e, and 212f coupled together. As an illustrative example, a series of hexagon-shaped structures or crush cells 38 are coupled to one another to establish crush strip 212a as shown in Figs. 7 and 8. Another series of crush cells 38 are coupled together to establish another crush strip 212b as shown in Figs. 7 and 8. Crush strips 212a, 212b are coupled together with other crush strips 212c, 212d, 212e, and 212f to establish first ride-down pad 211.

Each crush cell 38 includes six walls 39 each having about the same length. As shown in Figs. 7 and 8, each crush cell 38 is formed to include a hexagon-shaped crush aperture 40 arranged to open into a crush space 42 formed in crush cells 38. Crush space 42 is defined between the six walls 39 of crush cell 38. The six walls 39 are coupled to one another to establish a crush-cell perimeter 41. Each wall 39 has an illustrative first thickness A as shown in Fig. 7.

More precisely, as illustrated by figure 22, the crush cells are formed to include a crush aperture with a circular (like a straw), octogonal or other regular polygonal (more than five sides). According to a preferential embodiment, a hexagon shaped crush aperture is used, that opens into a crush space formed in the crush cells, the crush cells having six walls of having a generally uniform thickness labeled A, an height labeled L, and a diameter labeled D.

Preferentially, when using using Expanded Polystyrene (EPS) such as Styrodur® with a density equal to 33g/L, the dimensions of a cell are:

$$0,1mm \leq A \leq 5mm,$$

- 10mm $\leq$ L, and
- 10mm $\leq$ D $\leq$ 50mm.

In particular, good result s are obtained with A = 3mm, L = 35mm and D = 20mm.

Advantageously, such cells with the above dimensions permits shows a good deformation when an impact force to a side of a juvenile seat cause a limb of the occupant to impact the proposed energy dissipation system. Indeed, such cells are larger than the classical ones in order to reduce the spread of shock gradually from a cell to another.

In addition, larger cells permit to save material, which is low-cost, and permits also to reduce the weight of the seat, which improves its carrying or maneuverability for the parent.

Such crush cells are obtained from a crushable designed material, foams (e.g., extruded polymer products, extra cellular polymer substances, Polyurethane (PU), Thermoplastic Elastomer (TPE), Polypropylene (PP), Expanded Polypropylene (EPP), Expanded Polystyrene (EPS) etc.), polystyrene (PS), or combinations of the foregoing materials.

In particular, good results are obtained with the above dimensions and using an Expanded Polystyrene (EPS) called Styrodur® with a density equal to 33g/L.

Of course, one skilled in the art will adapt the dimensions of the cell as a function of the material, to obtain similar or better results.

The inventors have showed that using such cells dimensions and such a type of material permits to achieve good performance, in particular to meet the constraints imposed by the European standard I-Size, which imposes a 75g deceleration at the head, and a 50g deceleration at the thorax, during application of an impact force to a side of a juvenile seat.

The inventors have also shown that smaller cells, e.g. used by thousands, because of their small size, can not lead to results able to meet the requirements of the above standard.

Thus, the present invention aims at using such energy-dissipation systems made of such absorbing cells. It can be noted that the location of such energy-dissipation system is set, in the figures, near the head of the child. But, it is also possible to provide several pads included in such energy systems to protect in particular sensitive hinge points.

In this case, from one pad to another, it is possible that the crush cells dimensions of each pad are different. For all that, these dimensions respects the following ranges: 0,1mm $\leq$ A $\leq$ 5mm, 10mm $\leq$ L, and 5mm $\leq$ D $\leq$ 50mm.

It is also possible to provide a sole pad (at least for one side), designed to protect several part of the body.

If necessary, the shape and/or the height of the cells can be adapted to distinct parts of the body.

The pads and/or the number of pads can change with the age of child, since his limbs become stronger and stronger with the time. For example, when the child is a baby, such cells can be used in the whole seat to protect all the baby limbs. Therefore, removable and/or interchangeable pads can be provided.

For example, such energy dissipation system scan be used on substantially the whole surface (at least on both sides) of a « shell » baby car seat or a carrycot of group 0 or 0+. Thus, in such seats are provided energy-dissipation systems to protect the shoulder, the thorax, and/or the legs.

Fig. 23 shows an example of a carrycot 230 embodying two side pads (231, 232) and optionally a head pad 2301, implemented along the edges of a carrycot, with different thicknesses depending on the part of the occupant to protect.

In this illustrated example, it can be seen that the shape and/or the height of the cells can be adapted to distinct parts of the body.

More precisely, the two symmetrical side pads (231, 232) comprise for example three different parts 2302, 2303 and 2304 with three different heights L2, L3 and L4. The head pad 2301 presents also a distinct height L1.

First pad foundation 213 is coupled to first ride-down pad 211 as shown, for example, in Figs. 7-10. First pad foundation 213 is configured to provide means for supporting first ride-down pad 211 of crush strips 212 in spaced-apart relation to headrest 26. First pad foundation 213 interconnects first ride-down pad 211 to headrest 26, and in particular, to first side-wing panel 31 as shown in Fig. 4. It is within the scope of the present disclosure for first pad foundation 213 to be coupled to first ride-down pad 211. It is also within the scope of the present disclosure for first ride-down pad 211 and pad foundation 213 to cooperate to form a monolithic, first force dissipater 21.

As an example, pad foundation 213 is a sheet of foam material. A sheet is defined to be a broad, relatively thin layer of material having a generally constant density throughout. However, it is within the scope of the present disclosure for pad foundation 213 to be a layer of material including various structures that define voids in the substrate. Furthermore, the wall thickness may be varied so as to increase or decrease a volume of the void. Also, the height of the crush cell 38 may be varied.

As seen in Figs. 6A-6F and 9, first force dissipater 21 includes a front surface 50 and a back surface 52. Front surface 50 faces inward toward the child and back surface 52 faces outward toward first side-wing panel 31 when first force dissipater 21 is coupled to headrest 26 of juvenile vehicle seat 10. Front surface 50 includes an upper, convex surface 54 and a lower, concave surface 55 configured to engage with a child's head or upper body portion, respectively, during a collision, as illustrated in Figs. 7 and 9. Convex surface 54 is positioned between concave surface 55 and a top surface 56 of first force dissipater 21, and concave surface 55 is positioned between convex surface 54 and a bottom surface 57 of first force dissipater 21. Back surface 52 includes a back convex surface 58, as illustrated in Figs. 7 and 9.

As illustrated in Figs. 6A-6F and 9, first force dissipater 21 is wider near convex surface 54 than it is near concave surface 55. Bottom surface 57 is smaller in width than top surface 56 as a result of the smaller width of the first force dissipater 21 near concave surface 55. In this manner, first force dissipater 21 is arranged to correspond to a child's upper body with concave surface 55 and a child's head with convex surface 54. The result of this arrangement is that a child's upper body portion will engage with concave surface 55 of first force dissipater 21 before a child's head will engage with convex surface 54 of first force dissipater 21 after an external impact force 20 has impacted the juvenile vehicle seat 10.

As suggested in Fig. 11, second force dissipater 22 includes a second pad foundation 223 coupled to the seat backrest 24 and a second ride-down pad 221. Second ride-down pad 221 includes an array of outwardly projecting crush strips 222a, 222b, 222c, 222d, 222e, and 222f as shown in Figs. 11-14. Second ride-down pad 221 of outwardly projecting crush strips 222 is arranged to extend away from second side-wing panel 32 toward first side-wing panel 31. As shown in Figs. 11 and 12, second ride-down pad 221 includes a series of vertically oriented crush strips 222 coupled together. As an illustrative example, series of crush cells 38 are coupled to one another to establish crush strip 222a as shown in Figs. 11 and 12. Another series of crush cells 38 are coupled together to one another establish another crush strip 222b as shown in Figs. 11 and 12. Crush strips 222a, 222b are coupled together with other crush strips 222c, 222d, 222e, and 222f to establish second ride-down pad 221.

Second pad foundation 223 is coupled to second ride-down pad 221 as shown, for example, in Figs. 11-14. Second pad foundation 223 is configured to provide means for supporting second ride-down pad 221 of crush strips 222 in spaced-apart relation to headrest 26. Second pad foundation 223 interconnects second ride-down pad 221 to headrest 26, and in particular, to second side-wing panel 32 as shown in Fig. 4. It is within the scope of the present disclosure for second pad foundation 223 to be coupled to second ride-down pad 221. It is also within the scope of the present disclosure for second ride-down pad 221 and second pad foundation 223 to cooperate to form a monolithic second force dissipater 22.

As an example, second pad foundation 223 is a sheet of foam material. A sheet is defined to be a broad, relatively thin layer of material having a generally constant density throughout. However, it is within the scope of the present disclosure for second pad foundation 223 to be a layer of material including various structures that define voids in the substrate. Furthermore, the wall thickness may be varied so as to increase or decrease a volume of the void. Also, the height of the crush cell 38 may be varied.

Each crush cell 38 includes six walls 39 each having about the same length. As shown in Figs. 11 and 12, each crush cell 38 is formed to include hexagon-shaped crush aperture 40 arranged to open into crush space 42 formed in crush cell 38. The six walls 39 of the crush cell 38 define crush aperture 40. Crush space 42 is defined between the six walls 39. The six walls 39 are coupled to one another to establish crush-cell perimeter 41. Each wall has a first thickness A as shown in Fig. 11. It is within the scope of the present disclosure to vary the wall 39 thickness so as to increase or decrease a volume of the crush space 42.

As seen in Figs. 6A-6F and 13, second force dissipater 22 includes a front surface 60 and a back surface 62. Front surface 60 faces inward toward the child and back surface 62 faces outward toward second side-wing panel 32 when second force dissipater 22 is coupled to headrest 26 of juvenile vehicle seat 10. Front surface 60 includes an upper, convex surface 64 and a lower, concave surface 65 configured to engage with a child's head or upper body portion, respectively, during a collision, as illustrated in Figs. 11 and 13. Convex surface 64 is positioned between concave surface 65 and a top surface 66 of second force dissipater 22, and concave surface 65 is positioned between convex surface 64 and a bottom surface 67 of second force dissipater 22. Back surface 62 includes a back convex surface 68, as illustrated in Figs. 11 and 13.

As illustrated in Figs. 6A-6F and 13, second force dissipater 22 is wider near convex surface 64 than it is near concave surface 65. Bottom surface 67 is smaller in width than top surface 66 as a result of the smaller width of the second force dissipater 22 near concave surface 65. In this manner, second force dissipater 22 is arranged to correspond to a child's upper body with concave surface 65 and a child's head with convex surface 64. The result of this arrangement is that a child's upper body portion will engage with concave surface 65 of second force dissipater 22 before a child's head will engage with convex surface 64 of second force dissipater 22 after an external impact force 20 has impacted the juvenile vehicle seat 10.

As suggested in Fig. 15, third force dissipater 23 includes a third pad foundation 233 coupled to the seat backrest 24 and a third ride-down pad 231. Third ride-down pad 231 includes an array of outwardly projecting crush strips 232a, 232b, 232c, 232d, 232e, 232f, and 232g as shown in Figs. 15-17. Third ride-down pad 231 of outwardly projecting crush strips 232a, 232b, 232c, 232d, 232e, 232f, and 232g is arranged to extend away from rear panel 30 of headrest 26 into space 28 defined between first and second force dissipaters 21, 22 as shown in Fig. 4. As an illustrative example, a first crush strip 232a is an extended portion that is positioned to lie in spaced-apart relation to a second crush strip 232b to define a slot or channel portion 234a therebetween. Each pair of adjacent crush strips 232 is spaced apart from one another to define a companion channel portion 234a therebetween as shown in Figs. 15 and 17.

As shown in Fig. 15, each extended portion of crush strips 232 has a rectangular shape and has a first width W. Each channel portion 234 defined between each adjacent pair of crush strips 232 has a second width W2. It is within the scope of the present disclosure for first width W to be about equal to second width W2. It is also within the scope of the present disclosure for first width W to be less than second width W2 or greater than second width W2.

Third pad foundation 233 is coupled to third ride-down pad 231 as shown, for example, in Figs. 15-17. Third pad foundation 233 is configured to provide means for supporting third ride-down pad 231 of crush strips 232 in spaced-apart relation to headrest 26. Third pad foundation 233 interconnects third ride-down pad 231 to headrest 26, and in particular, to rear panel 30 as shown in Fig. 4. It is within the scope of the present disclosure for third pad foundation 233 to be coupled to third ride-down pad 231. It is also within the scope of the present disclosure for third ride-down pad 231 and third pad foundation 233 to cooperate to form a monolithic third force dissipater 23.

As an example, third pad foundation 233 is a substrate or sheet of foam material. A sheet is defined to be a broad, relatively thin layer of material having a generally constant density throughout. However, it is within the scope of the present disclosure for third pad foundation 233 to be a layer of material including various structures that define voids in the third-pad foundation 233. Furthermore, the wall thickness may be varied so as to increase or decrease a volume of the void.

Any suitable means may be used to retain first, second, and third force dissipaters 21, 22, 23 in the mounted positions shown in Figs. 1-4 and 6A-6F. As an example, force dissipaters may be coupled to panels 30, 31, 32 using fasteners such as hook-and-loop fasteners, glue, or any other suitable alternatives. In an illustrative embodiment, a fastener retains first force dissipater 21 in a fixed position relative to first side-wing panel 31.

Each of first, second, and third force dissipaters 21, 22, 23 is configured to deform at about a predetermined rate when exposed to a predetermined external impact force 20. It is within the scope of this disclosure to make first, second, and third force dissipaters 21, 22, 23 out of crushable designed material, foams (e.g., extruded polymer products, extra cellular polymer substances, Polyurethane (PU), Thermoplastic Elastomer (TPE), Polypropylene (PP), Expanded Polypropylene (EPP), Expanded Polystyrene (EPS) etc.), polystyrene (PS), or combinations of the foregoing materials.

Force dissipaters may be arranged to extend beyond a rim 34 of headrest 26 as shown, for example, in Fig. 4. Headrest 26 includes rim 34 that extends along first side-wing panel 31, rear panel 30, and second side-wing panel 32 and faces upwardly away from seat back 14. As shown in Fig. 4, second force dissipater 22 includes a front perimeter surface 36 that extends outwardly beyond rim 34 and faces away from headrest 26. As an illustrative example, second force dissipater 22 extends beyond rim 34 a distance D1 which is defined to be between rim 34 and front perimeter surface 36 as shown in Fig. 4. It is also within the scope of the present disclosure for front perimeter surface 36 to lie below rim 34. It is also within the scope of the present disclosure for the front perimeter surface to be configured to match the shape of rim 34 so that the front perimeter surface does not lie below or extend beyond rim 34.

A second illustrative child restraint 111 includes juvenile vehicle seat 110, a seat base 113, and energy-dissipation system 116 as shown in Figs. 18 and 19. Juvenile vehicle seat 110 is coupled to seat base 113, which is couple to a vehicle seat 44 as suggested in Fig. 18. Energy-dissipation system 116 comprises a force dissipater that is designed to minimize the g-loads experienced by a child seated on a seat bottom 112 of juvenile vehicle seat 110 during exposure of juvenile vehicle seat 110 to an external impact force. As an illustrative example, energy-dissipation system 116 includes first and second force dissipaters 21, 22 as shown in Figs. 18 and 19.

As shown in Fig. 18, energy-dissipation system 116 is coupled to seat back 114 of juvenile vehicle seat 110, and, in particular, to a headrest 126 included in seat back 114. In illustrative embodiments, energy-dissipation system 116 is mounted on an inside portion of juvenile vehicle seat 110 as suggested, for example, in Figs. 18 and 19. It is within the scope of the present disclosure to couple one or more of the force dissipaters included in energy-dissipation system 116 on other portions of juvenile vehicle seat 110 or other juvenile seat or device to facilitate absorption of energy caused by external impact forces applied to such seats or devices. It is also within the scope of the present disclosure to vary the number of force dissipaters coupled to the juvenile vehicle seat.

In the illustrated embodiment, seat back 114 of juvenile vehicle seat 110 includes a backrest 124 arranged to extend upwardly from seat bottom 112 and headrest 126 coupled to backrest 124. First force dissipater 21 is coupled to an inner wall of a first side-wing panel 131 included in headrest 126. Second force dissipater 22 is coupled to an inner wall of a second side-wing panel 132 included in headrest 126.

During a collision or other incident, application of an external impact force 20 to juvenile vehicle seat 110 causes juvenile vehicle seat 110 to move in the direction of impact force 20 (not shown) relative to an occupant. Such movement causes occupant to move toward and engage with or impact first force dissipater 21. This impact causes energy to be transferred from the impacting object (such as the occupant's shoulders and head) to first force dissipater 21 as suggested in Fig. 18.

First force dissipater 21 absorbs that transferred energy to minimize the magnitude of a resulting force applied to a child seated in juvenile vehicle seat 110 during the collision. First force dissipater 21 functions to minimize the g-loads (acceleration) experienced by the child seated on seat bottom 112 of juvenile vehicle seat 110 during exposure of seat 110 to external impact force 20 as suggested in Fig. 18. First force dissipater 21 also functions to maximize the time interval (i.e., ride-down time) between the moment the impacting object strikes first force dissipater 21 to apply the external impact force and the moment that resulting force reaches zero.

First force dissipater 21 and second force dissipater 22 of juvenile vehicle seat 110 are substantially similar in size, shape, and pattern to the first and second force dissipaters 21 and 22 as described for juvenile vehicle seat 10.

As suggested in Fig. 20, according to another embodiment the energy-dissipation system is made of a single force dissipater 200, or in other words a the energy-dissipation system comprises a single pad foundation 200, extending from a first side-wing panel included in the headrest and coupled to a first ride-down pad, to an opposite second side-wing panel included in the headrest and coupled to a second ride-down pad and optionally coupled in the middle to a third ride-down pad positioned between the first and second ride-down pads, the third ride-down pad being mountable on the forward-facing wall of the seat back.

According to a variant of this embodiment, it is possible that the single force dissipater is able to be connected to an inner wall of the child car seat.

Such a seat can be a child car seat 210 (as represented on the left of Fig. 20), or a baby car seat with a « shell » or « hull » shape 2110 (as represented on the right of Fig. 20), or also a carrycot (not represented).

According to another variant of this embodiment, it is also possible that the single force dissipater is connected to the juvenile seat by other means like for example the classical ones that permits to couple or decouple a headrest to the seats of a car.

Thus, according to this variant, such an energy-dissipation system is an independent accessory, which can be detached from a baby car seat and reattached after on a child car seat when the child grows up.

As illustrated by Fig. 21, such a single force dissipater 200 has a U-shape. Indeed, the example of Fig. 21 aims at protecting the head especially.

A U-shape single force dissipater with an adapted width and height could be also provided to protect both the head and the shoulders of the occupant.

In addition, it is obvious that other shapes of the single force dissipater, using the cells as described by Fig. 22, are implemented to protect other limbs of the child. A shape especially adapted to protect a shoulder, a whole arm, the thorax, the pelvis, a whole leg or a foot, is also considered for achieving the goals of the present invention.

According to another variant, the crush cells of the proposed energy-dissipation system could also be implemented in the whole inner surface of the juvenile vehicle seat.

It is possible to combine pads according to the invention with other passive (such as pads comprising at least one air chamber) or active security means (such as inflating airbag). For example, it is possible to provide a seat with air chamber pads for the head and crush cell pads according to the invention for the shoulders and/or the thorax. Inflatable airbags, e.g. mounted on the harness can be added.

**Claims**

1. A child restraint (211) comprising an energy-dissipation system (16, 200) including at least one pad (221) of the child restraint, said at least pad (221) comprising a series of crush cells (38) coupled to one another, each crush cell (38) being defined by at least one wall (39) delimiting a crush aperture (40) opening into a crush space (42) formed in the crush cell (38), **characterised in that** said crush aperture (40) opening is a polygon presenting an inner dimension D such that 5mm ≤ D ≤ 50mm, said inner dimension corresponding to the diameter of an inscribed circle in said polygon, or to two times the apothem of said polygon, said at least one wall of height L being perpendicular to the pad's surface where a part of the body of a child rests, making each crush cell (38) outwardly projecting from said pad (221).

2. The child restraint of claim 1, wherein 10mum ≤ D.

3. The child restraint of claim 2, wherein said at least one wall has a substantially uniform thickness A, where 0,1mum ≤ A ≤ 5mm.

4. The child restraint of claim 1, wherein each crush cell (38) has a plurality of wall-parts delimiting said at least one wall of height L, where 10mm ≤ L.

5. The child restraint of anyone of the preceding claims, wherein each crush aperture in the first strip has a shape belonging to the group comprising:

   - hexagon shape,
   - octogon shape,
   - polygon shape,
   - circular shape.

6. The child restraint of anyone of the preceding claims, wherein said crush cells (38) are obtained from a crushable designed material, foams belonging to the group comprising:

   - extruded polymer products,
   - extra cellular polymer substances,
   - Polyurethane (PU),
   - Thermoplastic Elastomer (TPE),
   - Polypropylene (PP),
   - Expanded Polypropylene (EPP),
   - Expanded Polystyrene (EPS),
   - polystyrene (PS),
   - or combinations of the foregoing materials.

7. The child restraint of claim 6, wherein said crush cells (38) are obtained from an Expanded Polystyrene (EPS) called Styrodur® with a density substantially equal to 33g/L.

8. The child restraint of anyone of the preceding claims, wherein said at least one pad (31) extend at least on a side of said child restraint.

9. The child restraint of anyone of the preceding claims, wherein said at least one pad (31) is located so as to be close to the head, the shoulder, the thorax, the basin and/or the leg of the occupant.

10. The child restraint of claim 9, wherein said crush cells (38) have distinct shapes and/or heights, depending on the part of the body of the occupant to be protected.

11. The child restraint of anyone of the preceding claims, wherein said at least one pad has a U-shape to protect the head of the occupant, said pad extending from a first side-wing panel of said juvenile vehicle seat to an opposite second side-wing panel of said juvenile vehicle seat.

12. The child restraint of anyone of the preceding claims, wherein said energy-dissipation system (200) comprises a pad having a plurality of zones and/or a plurality of pads, the shape of said zones and/or pads being adapted to a part of the body of the occupant to protect.

13. The child restraint of anyone of the preceding claims, wherein said child restraint comprises at least:

   - a carrycot (230), and/or
   - a baby « shell » car seat (2110), and/or
   - a child car seat (210) of group 1, 2 and/or 3.

14. The child restraint of anyone of the preceding claims, wherein said child restraint comprises a seat bottom (12) and a seat back (14) coupled to the seat bottom (12) and arranged to extend upwardly away from the seat bottom (12), and wherein said at least one pad comprises a pad foundation (213) coupled to the seat back (14) and a ridedown pad (221) coupled to said pad foundation (213) to locate the pad foundation between (213) the seat back (14) and the ride-down pad (221).

15. A pad (221) configured to control movement of an occupant of a child restraint, said at least pad comprising a series of crush cells (38) coupled to one another, each crush cell (38) being defined by at least one wall (39) delimiting a crush aperture (40) opening into a crush space (42) formed in the crush cell (38), **characterised in that** said crush aperture (40) opening is a polygon presenting an inner dimensionD such that 5mm ≤ D ≤ 50mm, said inner dimension corresponding to the diameter of an inscribed circle in said polygon, or to two times the apothem of said polygon, said at least one wall of height L being perpendicular to the pad's surface where a part of the body of a child rests, making each crush cell (38) outwardly projecting from said pad (221).

**Patentansprüche**

1. Rückhalteeinrichtung für Kinder (211), die ein Energiedissipationssystem (16, 200) aufweist, das wenigstens ein Kissen (221) der Rückhalteeinrichtung für Kinder umfasst, wobei das wenigstens eine Kissen (221) eine Reihe von aneinander gekoppelten Eindrückzellen (38) aufweist, wobei jede Eindrückzelle (38) durch wenigstens eine Wand (39) definiert ist, die eine Eindrücköffnung (40) abgrenzt, die sich in einen in der Eindrückzelle (38) gebildeten Eindrückraum (42) öffnet, **dadurch gekennzeichnet, dass** die Öffnung der Eindrücköffnung (40) ein Polygon ist, das ein Innenmaß D aufweist, in der Art, dass 5 mm ≤ D ≤ 50 mm ist, wobei das Innenmaß dem Durchmesser eines Inkreises in dem Polygon oder zweimal dem Apothema des Polygons entspricht, wobei die wenigstens eine Wand der Höhe L senkrecht auf der Oberfläche des Kissens ist, auf der ein Teil des Körpers eines Kindes aufliegt, wodurch jede Eindrückzelle (38) nach außen von dem Kissen (221) hervorsteht.

2. Rückhalteeinrichtung für Kinder nach Anspruch 1, wobei 10 mm ≤ D ist.

3. Rückhalteeinrichtung für Kinder nach Anspruch 2, wobei die wenigstens eine Wand eine im Wesentlichen gleichmäßige Dicke A aufweist, wobei 0,1 mm ≤ A ≤ 5mm ist.

4. Rückhalteeinrichtung für Kinder nach Anspruch 1, wobei jede Eindrückzelle (38) eine Vielzahl von Wandteilen aufweist, die die wenigstens eine Wand der Höhe L abgrenzen, wobei 10 mm ≤ L ist.

5. Rückhalteeinrichtung für Kinder nach einem der vorstehenden Ansprüche, wobei jede Eindrücköffnung in dem ersten Streifen eine Form hat, die zu der Gruppe gehört umfassend:

- Hexagonale Form,
- Oktogonale Form,
- Polygonform,
- Kreisform.

6. Rückhalteeinrichtung für Kinder nach einem der vorstehenden Ansprüche, wobei die Eindrückzellen (38) aus einem eindrückbar gestalteten Material erhalten werden, Schäume gehörend zu der Gruppe umfassend:

- extrudierte Polymerprodukte,
- extrazelluläre polymere Substanzen,
- Polyurethan (PU),
- Thermoplastisches Elastomer (TPE),
- Polypropylen (PP),
- Expandiertes Polypropylen (EPP),
- Expandiertes Polystyrol (EPS),
- Polystyrol (PS),
- oder Kombinationen der vorstehenden Materialen.

7. Rückhalteeinrichtung für Kinder nach Anspruch 6, wobei die Eindrückzellen (6) aus einem expandierten Polystyrol (EPS) genannt Styrodur® mit einer Dichte erhalten werden, die im Wesentlichen 33 g/L entspricht.

8. Rückhalteeinrichtung für Kinder nach einem der vorstehenden Ansprüche, wobei das wenigstens eine Kissen (31) sich an wenigstens einer Seite der Rückhalteeinrichtung für Kinder erstreckt.

9. Rückhalteeinrichtung für Kinder nach einem der vorstehenden Ansprüche, wobei das wenigstens eine Kissen (31) angeordnet ist, um nahe an dem Kopf, der Schulter, der Brust, dem Becken und/oder dem Bein des Insassen zu sein.

10. Rückhalteeinrichtung für Kinder nach Anspruch 9, wobei die Einrückzeilen (38) verschiedene Formen und/oder Höhen in Abhängigkeit von dem zu schützenden Teil des Körpers des Insassen haben.

11. Rückhalteeinrichtung für Kinder nach einem der vorstehenden Ansprüche, wobei das wenigstens eine Kissen eine U-Form hat, um den Kopf des Insassen zu schützen, wobei sich das Kissen von einer ersten Seitenflügelwand des Fahrzeugkindersitzes zu einer gegenüberliegenden zweiten Seitenflügelwand des Fahrzeugkindersitzes erstreckt.

12. Rückhalteeinrichtung für Kinder nach einem der vorstehenden Ansprüche, wobei das Energiedissipationssystem (200) ein Kissen mit einer Vielzahl von Zonen und/oder eine Vielzahl von Kissen aufweist, wobei die Form der Zonen und/oder der Kissen an einen zu schützenden Teil des Körpers des Insassen angepasst ist.

13. Rückhalteeinrichtung für Kinder nach einem der vorstehenden Ansprüche, wobei die Rückhalteeinrichtung für Kinder wenigstens aufweist:

- eine Babytragetasche (230) und/oder
- einen "Babyschalen"-Autositz (2110) und/oder
- einen Kinderautositz (210) der Gruppe 1, 2 und/oder 3.

14. Rückhalteeinrichtung für Kinder nach einem der vorstehenden Ansprüche, wobei die Rückhalteeinrichtung für Kinder wenigstens eine Sitzfläche (12) und eine Rückenlehne (14) aufweist, die mit der Sitzfläche (12) gekoppelt ist und angeordnet ist, sich nach oben von der Sitzfläche (12) weg zu erstrecken, und wobei das wenigstens eine Kissen einen Kissenunterbau (213), der an die Rückenlehne (14) gekoppelt ist, und ein Ableitkissen (221) (engl. ride-down pad) aufweist, das an den Kissenunterbau (213) gekoppelt ist, um den Kissenunterbau (213) zwischen der Rückenlehne (14) und dem Ableitkissen (221) anzuordnen.

15. Kissen (221), das eingerichtet ist, eine Bewegung eines Insassen einer Rückhalteeinrichtung für Kinder zu kontrollieren, wobei das wenigstens eine Kissen eine Reihe von aneinander gekoppelten Eindrückzellen (38) aufweist, wobei jede Eindrückzelle (38) durch wenigstens eine Wand (39) definiert ist, die eine Eindrücköffnung abgrenzt, die sich in einen in der Eindrückzelle (38) gebildeten Eindrückraum (42) öffnet, **dadurch gekennzeichnet, dass** die Öffnung der Eindrücköffnung (40) ein Polygon ist, das ein Innenmaß D aufweist, in der Art, dass 5 mm $\leq$ D $\leq$ 50 mm ist, wobei das Innenmaß dem Durchmesser eines Inkreises in dem Polygon oder zweimal dem Apothema des Polygons entspricht, wobei die wenigstens eine Wand der Höhe L senkrecht auf der Oberfläche des Kissens ist, auf der ein Teil des Körpers eines Kindes aufliegt, wodurch jede Eindrückzelle (38) nach außen von dem Kissen (221) hervorsteht.

**Revendications**

1. Dispositif de retenue pour enfant (211) comprenant un système de dissipation d'énergie (16, 200) incluant au moins un coussinet (221) du dispositif de retenue pour enfant, ledit au moins un coussinet (221) comprenant une série de cellules à écrasement (38) accouplées les unes aux autres, chaque cellule à écrasement (38) étant définie par au moins une paroi (39) délimitant une ouverture à écrasement (40) s'ouvrant dans un espace à écrasement (42) formé dans la cellule à écrasement (38), **caractérisé en ce que** ladite ouverture à écrasement (40) s'ouvrant est un polygone présentant une dimension intérieure D de telle sorte que 5 mm D $\leq$ 50 mm, ladite dimension intérieure correspondant au diamètre d'un cercle inscrit dans ledit polygone, ou à deux fois l'apothème dudit polygone, ladite au moins une paroi de hauteur L étant perpendiculaire à la surface du coussinet où une partie du corps d'un enfant repose, faisant en sorte que chaque cellule à écrasement (38) fasse saillie vers l'extérieur à partir dudit coussinet (221).

2. Dispositif de retenue pour enfant selon la revendication 1, dans lequel 10 mm $\leq$ D.

3. Dispositif de retenue pour enfant selon la revendication 2, dans lequel ladite au moins une paroi possède une épaisseur sensiblement uniforme A, où 0,1 mm $\leq$ A $\leq$ 5 mm.

4. Dispositif de retenue pour enfant selon la revendication 1, dans lequel chaque cellule à écrasement (38) possède une pluralité de parties de paroi délimitant ladite au moins une paroi de hauteur L, où 10 mm $\leq$ L.

5. Dispositif de retenue pour enfant selon l'une quelconque des revendications précédentes, dans lequel chaque ouverture à écrasement dans la première bande possède une forme appartenant au groupe comprenant :

- une forme hexagonale,
- une forme octogonale,
- une forme polygonale,
- une forme circulaire.

6. Dispositif de retenue pour enfant selon l'une quelconque des revendications précédentes, dans lequel lesdites cellules à écrasement (38) sont obtenues à partir d'un matériau conçu pour pouvoir être écrasé, de mousses appartenant au groupe comprenant :

- des produits polymères extrudés,
- des substances polymères extra cellulaires,
- du polyuréthane (PU),
- de l'élastomère thermoplastique (TPE),
- du polypropylène (PP),
- du polypropylène expansé (EPP),
- du polystyrène expansé (EPS),
- du polystyrène (PS),
- ou des combinaisons des matériaux précédents.

**7.** Dispositif de retenue pour enfant selon la revendication 6, dans lequel lesdites cellules à écrasement (38) sont obtenues à partir d'un polystyrène expansé (EPS) appelé Styrodur® avec une densité sensiblement égale à 33 g/L.

**8.** Dispositif de retenue pour enfant selon l'une quelconque des revendications précédentes, dans lequel ledit au moins un coussinet (31) s'étend au moins sur un côté dudit dispositif de retenue pour enfant.

**9.** Dispositif de retenue pour enfant selon l'une quelconque des revendications précédentes, dans lequel ledit au moins un coussinet (31) est situé afin d'être proche de la tête, de l'épaule, du thorax, du bassin et/ou de la jambe de l'occupant.

**10.** Dispositif de retenue pour enfant selon la revendication 9, dans lequel lesdites cellules à écrasement (38) possèdent des formes et/ou hauteurs distinctes, en fonction de la partie du corps de l'occupant destiné à être protégé.

**11.** Dispositif de retenue pour enfant selon l'une quelconque des revendications précédentes, dans lequel ledit au moins un coussinet présente une forme de U pour protéger la tête de l'occupant, ledit coussinet s'étendant d'un premier panneau d'aile latérale dudit siège de véhicule pour enfant à un second panneau d'aile latérale opposé dudit siège de véhicule pour enfant.

**12.** Dispositif de retenue pour enfant selon l'une quelconque des revendications précédentes, dans lequel ledit système de dissipation d'énergie (200) comprend un coussinet possédant une pluralité de zones et/ou une pluralité de coussinets, la forme desdites zones et/ou desdits coussinets étant adaptée à une partie du corps de l'occupant à protéger.

**13.** Dispositif de retenue pour enfant selon l'une quelconque des revendications précédentes, dans lequel ledit dispositif de retenue pour enfant comprend au moins :

- un berceau transportable (230), et/ou
- un siège de véhicule « en coque » pour bébé (2110), et/ou
- un siège de voiture pour enfant (210) de groupe 1, 2 et/ou 3.

**14.** Dispositif de retenue pour enfant selon l'une quelconque des revendications précédentes, dans lequel ledit dispositif de retenue pour enfant comprend une assise de siège (12) et un dossier de siège (14) accouplé à l'assise de siège (12) et agencé pour s'étendre vers le haut pour s'éloigner de l'assise de siège (12), et dans lequel ledit au moins un coussinet comprend une fondation de coussinet (213) accouplée au dossier de siège (14) et un coussinet de descente (221) accouplé à ladite fondation de coussinet (213) pour positionner la fondation de coussinet (213) entre le dossier de siège (14) et le coussinet de descente (221).

**15.** Coussin (221) configuré pour contrôler le mouvement d'un occupant d'un dispositif de retenue pour enfant, ledit au moins un coussinet comprenant une série de cellules à écrasement (38) accouplées les unes aux autres, chaque cellule à écrasement (38) étant définie par au moins une paroi (39) délimitant une ouverture à écrasement (40) s'ouvrant dans un espace à écrasement (42) formé dans la cellule à écrasement (38),

**caractérisé en ce que**

ladite ouverture à écrasement (40) s'ouvrant est un polygone présentant une dimension intérieure D de telle sorte que 5 mm $\leq$ D $\leq$ 50 mm, ladite dimension intérieure correspondant au diamètre d'un cercle inscrit dans ledit polygone, ou à deux fois l'apothème dudit polygone, ledit au moins une paroi de hauteur L étant perpendiculaire à la surface du coussinet où une partie du corps d'un enfant repose, faisant en sorte que chaque cellule à écrasement (38) fasse saillie vers l'extérieur à partir dudit coussinet (221).

HEAD LINE

CENTER LINE

BODY LINE

IMPACT FORCE

*FIG. 1*

IMPACT FORCE

*FIG. 2*

IMPACT FORCE

*FIG. 3*

*FIG. 4*

FIG. 5

FIG. 6A

FIG. 6B

FIG. 6C

FIG. 6D

FIG. 6E

FIG. 6F

IMPACT FORCE

IMPACT FORCE

IMPACT FORCE

RECOIL FORCE

RECOIL FORCE

RECOIL FORCE

STOP

FIG. 7

*FIG.* 8

FIG. 9

FIG. 10

FIG. 11

*FIG.*12

*FIG. 13*

*FIG. 14*

**FIG. 15**

23

232c
234b
232b
234a
232a

233

231

*FIG. 16*

FIG. 17

*FIG. 18*

*FIG. 19*

Fig. 20

Fig. 21

Fig. 22

Fig. 23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011054063 A